(19) Europäisches Patentamt
European Patent Office
Office européen des brevets

(11) **EP 4 589 904 A1**

(12) **EUROPEAN PATENT APPLICATION**
published in accordance with Art. 153(4) EPC

(43) Date of publication:
**23.07.2025 Bulletin 2025/30**

(21) Application number: **23896739.2**

(22) Date of filing: **27.11.2023**

(51) International Patent Classification (IPC):
***H04L 27/34*** *(2006.01)*

(52) Cooperative Patent Classification (CPC):
**H04L 27/34; H04L 27/36**

(86) International application number:
**PCT/CN2023/134402**

(87) International publication number:
**WO 2024/114590 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022 CN 202211520098**

(71) Applicant: **ZTE Corporation
Shenzhen, Guangdong 518057 (CN)**

(72) Inventors:
• **YUAN, Zhifeng
Shenzhen, Guangdong 518057 (CN)**
• **LI, Weimin
Shenzhen, Guangdong 518057 (CN)**
• **LI, Zhigang
Shenzhen, Guangdong 518057 (CN)**
• **MA, Yihua
Shenzhen, Guangdong 518057 (CN)**

(74) Representative: **Savi, Massimiliano et al
Notarbartolo & Gervasi S.p.A.
Viale Achille Papa, 30
20149 Milano (IT)**

(54) **INFORMATION TRANSMISSION METHOD, COMMUNICATION DEVICE, AND STORAGE MEDIUM**

(57)     The present application provides an information transmission method, a communication device, and a storage medium. The method comprises: in a non-connected state, transmitting a modulation symbol to a second communication node. The modulation symbol is obtained by modulating (M1+1) pieces of bit information in an information packet according to a first constellation diagram model, or is obtained by modulating (M2+2) pieces of bit information in the information packet according to a second constellation diagram model, or is obtained by modulating (M3+3) pieces of bit information in the information packet according to a third constellation diagram model.

```
Transmit modulation symbols to a second communication node in a non-        ⌐ S110
connected state
```

FIG. 2

EP 4 589 904 A1

**Description**

**CROSS-REFERENCE TO RELATED APPLICATION**

This application is based on and claims the priority of Chinese patent application No. 202211520098.4 filed on November 30, 2022, the disclosure of which is incorporated herein by reference in its entirety.

**TECHNICAL FIELD**

Embodiments of the present disclosure relate to, but are not limited to, the technical field of communications, and particularly to an information transmission method, a communication device, and a storage medium.

**BACKGROUND**

In scenarios where a radio communication system connects with a large amount of User Equipment (UE), the radio communication system needs to engage in information transmission with the massive number of terminal devices. For traditional information transmission methods, terminal devices must be in a connected state to facilitate information transmission with the system (or base station). Before each information transmission, terminal devices need to undergo complex signaling interactions with the base station, which greatly increases both power consumption of the terminal devices and system signaling overhead.

Additionally, if the spectral efficiency for information transmission of each terminal device is required to be not too low, it is also necessary to increase the order of the modulation scheme to enhance the spectral efficiency. In existing technology, high-order modulation schemes commonly employed include Quadrature Amplitude Modulation (QAM), such as 16 QAM, 32 QAM, 64 QAM, and 256 QAM. However, these high-order modulation schemes require accurate channel estimation to ensure performance. If there are significant channel estimation errors, the constellation diagram will distort during demodulation, leading to degraded demodulation performance and making it difficult to achieve information transmission with high spectral efficiency. Therefore, how to achieve information transmission with high spectral efficiency for massive terminal devices while reducing power consumption of the terminal devices and system signaling overhead is an urgent issue to be addressed.

**SUMMARY**

Embodiments of the present disclosure provide an information transmission method, a communication device, and a storage medium, which not only reduce terminal device power consumption and system signaling overhead but also enable a large number of first communication nodes to achieve high spectral efficiency information transmission.

In accordance with a first aspect of the present disclosure, an embodiment provides an information transmission method, which is applied to a first communication node and includes:

transmitting modulation symbols to a second communication node in a non-connected state, where the modulation symbols are obtained by one of:

modulating $M1 + 1$ bits of information in an information packet according to a first constellation model, where the first constellation model contains $2 * N1$ constellation points, $M1$ is an integer greater than or equal to 1, and $N1$ and $M1$ satisfy $N1 = 2^{M1}$; complex representations corresponding to the $2 * N1$ constellation points in the first constellation model are as follows:

$$a_1 e^{j\theta}, a_2 e^{j\theta}, \cdots, a_{N1} e^{j\theta},$$

$$a_1 e^{j(\theta+\pi)}, a_2 e^{j(\theta+\pi)}, \cdots, a_{N1} e^{j(\theta+\pi)};$$

$\pi$ represents pi; $j$ represents an imaginary number; a value of $j$ is $\sqrt{-1}$; $e$ represents a natural logarithm; $\theta$ represents a real number; $a_1$, $a_2$, $\cdots$, $a_{N1}$ are all positive numbers and satisfy

$$0 < a_1 < a_2 < \cdots < a_{N1};$$

modulating $M2 + 2$ bits of information in the information packet according to a second constellation model, where the second constellation model contains $4 * N2$ constellation points, $M2$ is an integer greater than or equal to 1, and $N2$ and

M2 satisfy $N2 = 2^{M2}$; complex representations corresponding to the 4 * N2 constellation points in the second constellation model are as follows:

$$a_1 e^{j\theta}, a_2 e^{j\theta}, \cdots, a_{N2} e^{j\theta},$$

$$b_1 e^{j(\theta+\pi/2)}, b_2 e^{j(\theta+\pi/2)}, \cdots, b_{N2} e^{j(\theta+\pi/2)},$$

$$a_1 e^{j(\theta+\pi)}, a_2 e^{j(\theta+\pi)}, \cdots, a_{N2} e^{j(\theta+\pi)},$$

$$b_1 e^{j(\theta+3\pi/2)}, b_2 e^{j(\theta+3\pi/2)}, \cdots, b_{N2} e^{j(\theta+3\pi/2)};$$

$\pi$ represents pi; $j$ represents an imaginary number; a value of $j$ is $\sqrt{-1}$; $e$ represents a natural logarithm; $\theta$ represents a real number; $a_1, a_2, \cdots, a_{N2}$ and $b_1, b_2, \cdots, b_{N2}$ are all positive numbers and satisfy $0 < a1 < a_2 < \cdots < a_{N2}$, $0 < b_1 < b_2 < ... < b_{N2}$; or

modulating $M3 + 3$ bits of information in the information packet according to a third constellation model, where the third constellation model contains 8 * N3 constellation points, M3 is an integer greater than or equal to 0, and N3 and M3 satisfy $N3 = 2^{M3}$; complex representations corresponding to the 8 * N3 constellation points in the third constellation model are as follows:

$$a_1 e^{j\theta}, a_2 e^{j\theta}, \cdots, a_{N3} e^{j\theta},$$

$$b_1 e^{j\left(\theta+\frac{\pi}{4}\right)}, b_2 e^{j\left(\theta+\frac{\pi}{4}\right)}, \cdots, b_{N3} e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_{N3} e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_{N3} e^{j\left(\theta+\frac{3\pi}{4}\right)},$$

$$a_1 e^{j(\theta+\pi)}, a_2 e^{j(\theta+\pi)}, \cdots, a_{N3} e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_{N3} e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_{N3} e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_{N3} e^{j\left(\theta+\frac{7\pi}{4}\right)};$$

$\pi$ represents pi; $j$ represents an imaginary number; a value of $j$ is $\sqrt{-1}$; $e$ represents a natural logarithm; $\theta$ represents a real number; $a_1, a_2, \cdots, a_{N3}$ and $b_1, b_2, \cdots, b_{N3}$ are all positive numbers and satisfy $0 < a_1 < a_2 < \cdots < a_{N3}$, $0 < b_1 < b_2 < \cdots < b_{N3}$.

In accordance with a second aspect of the present disclosure, an embodiment provides an information transmission method, which is applied to a second communication node and includes:
receiving modulation symbols sent by a first communication node in a non-connected state, where the modulation symbols are obtained by one of:

modulating $M1 + 1$ bits of information in an information packet according to a first constellation model, where the first constellation model contains 2 * N1 constellation points, M1 is an integer greater than or equal to 1, and N1 and M1 satisfy $N1 = 2^{M1}$; complex representations corresponding to the 2 * N1 constellation points in the first constellation model are as follows:

$$a_1 e^{j\theta}, a_2 e^{j\theta}, \cdots, a_{N1} e^{j\theta},$$

$$a_1 e^{j(\theta+\pi)}, a_2 e^{j(\theta+\pi)}, \cdots, a_{N1} e^{j(\theta+\pi)};$$

$\pi$ represents pi; $j$ represents an imaginary number; a value of $j$ is $\sqrt{-1}$; $e$ represents a natural logarithm; $\theta$ represents a real number; $a_1$, $a_2$, $\cdots$, $a_{N1}$ are all positive numbers and satisfy $0 < a_1 < a_2 < ... < a_{N1}$;

modulating $M2 + 2$ bits of information in the information packet according to a second constellation model, where the second constellation model contains $4 * N2$ constellation points, $M2$ is an integer greater than or equal to 1, and $N2$ and $M2$ satisfy $N2 = 2^{M2}$; complex representations corresponding to the $4 * N2$ constellation points in the second constellation model are as follows:

$$a_1 e^{j\theta}, a_2 e^{j\theta}, \cdots, a_{N2} e^{j\theta},$$

$$b_1 e^{j(\theta+\pi/2)}, b_2 e^{j(\theta+\pi/2)}, \cdots, b_{N2} e^{j(\theta+\pi/2)},$$

$$a_1 e^{j(\theta+\pi)}, a_2 e^{j(\theta+\pi)}, \cdots, a_{N2} e^{j(\theta+\pi)},$$

$$b_1 e^{j(\theta+3\pi/2)}, b_2 e^{j(\theta+3\pi/2)}, \cdots, b_{N2} e^{j(\theta+3\pi/2)};$$

$\pi$ represents pi; $j$ represents an imaginary number; a value of $j$ is $\sqrt{-1}$; $e$ represents a natural logarithm; $\theta$ represents a real number; $a_1$, $a_2$, $\cdots$, $a_{N2}$ and $b_1$, $b_2$, $\cdots$, $b_{N2}$ are all positive numbers and satisfy $0 < a_1 < a_2 < \cdots < a_{N2}$, $0 < b_1 < b_2 < \cdots < b_{N2}$;

modulating $M3 + 3$ bits of information in the information packet according to a third constellation model, where the third constellation model contains $8 * N3$ constellation points, $M3$ is an integer greater than or equal to 0, and $N3$ and $M3$ satisfy $N3 = 2^{M3}$; complex representations corresponding to the $8 * N3$ constellation points in the third constellation model are as follows:

$$a_1 e^{j\theta}, a_2 e^{j\theta}, \cdots, a_{N3} e^{j\theta},$$

$$b_1 e^{j\left(\theta+\frac{\pi}{4}\right)}, b_2 e^{j\left(\theta+\frac{\pi}{4}\right)}, \cdots, b_{N3} e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_{N3} e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_{N3} e^{j\left(\theta+\frac{3\pi}{4}\right)},$$

$$a_1 e^{j(\theta+\pi)}, a_2 e^{j(\theta+\pi)}, \cdots, a_{N3} e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_{N3} e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_{N3} e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_{N3} e^{j\left(\theta+\frac{7\pi}{4}\right)};$$

$\pi$ represents pi; $j$ represents an imaginary number; a value of $j$ is $\sqrt{-1}$ ; $e$ represents a natural logarithm; $\theta$ represents a real number; $a_1, a_2, \cdots, a_{N3}$ and $b_1, b_2, \cdots, b_{N3}$ are all positive numbers and satisfy $0 < a_1 < a_2 < \cdots < a_{N3}$, $0 < b_1 < b_2 < \cdots < b_{N3}$.

In accordance with a third aspect of the present disclosure, an embodiment further provides a communication device, including: at least one processor and at least one memory, where the at least one memory is configured to store at least one program; and the at least one program, when executed by the at least one processor, causes the processor to implement the information transmission method described above.

In accordance with a fourth aspect of the present disclosure, an embodiment further provides a computer-readable storage medium storing computer-executable instructions for implementing the information transmission method described above.

In accordance with a fifth aspect of the present disclosure, an embodiment further provides a computer program product, including a computer program or computer instructions stored in a computer-readable storage medium, from which a processor of a computer device reads the computer program or the computer instructions, where the computer program or the computer instructions, when executed by the processor, cause the computer device to perform the information transmission method described above.

An embodiment of the present disclosure includes: transmitting modulation symbols by a first communication node to a second communication node in a non-connected state, where the modulation symbols are obtained by modulating $M1 + 1$ bits of information in an information packet according to a first constellation model, or the modulation symbols are obtained by modulating $M2 + 2$ bits of information in an information packet according to a second constellation model, or the modulation symbols are obtained by modulating $M3 + 3$ bits of information in an information packet according to a third constellation model. That is to say, the first communication node may transmit the modulation symbols to the second communication node in a non-connected state, without the need for a series of signaling interaction processes with the second communication node before each information transmission, thereby effectively reducing terminal device power consumption and system signaling overhead. Meanwhile, the modulation symbols may be obtained by modulating a plurality of bits of information in an information packet according to the first constellation model, the second constellation model, or the third constellation model, that is, the modulation symbols may carry multiple bits of information, thereby achieving high-order modulation. Moreover, the modulation symbols obtained through modulation according to the first constellation model, the second constellation model, or the third constellation model can improve the robustness of channel estimation, making it easier for the second communication node to extract channel information and improving its demodulation performance. Therefore, the embodiments of the present disclosure enable a large number of first communication nodes to achieve high spectral efficiency information transmission while reducing terminal device power consumption and system signaling overhead.

## BRIEF DESCRIPTION OF DRAWINGS

FIG. 1 is a constellation diagram corresponding to 64 QAM modulation symbols provided by an embodiment of the present disclosure;
FIG. 2 is a flowchart of an information transmission method provided by an embodiment of the present disclosure;
FIG. 3 is a flowchart detailing a specific method for S110 in FIG. 2;
FIG. 4 is a flowchart of an information transmission method provided by another embodiment of the present disclosure;
FIG. 5 is a schematic view of a first constellation model and a second constellation model provided by an embodiment of the present disclosure;
FIG. 6 is a schematic view of a cross-shaped constellation diagram before and after channel rotation and scaling, provided by an embodiment of the present disclosure;
FIG. 7 is a schematic view of partitioning a region on a two-dimensional plane coordinate system according to an embodiment of the present disclosure;
FIG. 8 is a schematic view of a cross-shaped constellation diagram provided by an embodiment of the present disclosure;
FIG. 9 is a schematic view of a cross-shaped constellation diagram provided by another embodiment of the present disclosure;
FIG. 10 is a schematic view of a cross-shaped constellation diagram provided by another embodiment of the present disclosure;
FIG. 11 is a schematic view of a cross-shaped constellation diagram provided by another embodiment of the present disclosure;

FIG. 12 is a schematic view of a cross-shaped constellation diagram provided by another embodiment of the present disclosure;

FIG. 13 is a schematic view of a cross-shaped constellation diagram provided by another embodiment of the present disclosure;

FIG. 14 is a schematic view of a cross-shaped constellation diagram provided by another embodiment of the present disclosure;

FIG. 15 is a schematic view of a cross-shaped constellation diagram provided by another embodiment of the present disclosure;

FIG. 16 is a schematic view of a cross-shaped constellation diagram provided by another embodiment of the present disclosure;

FIG. 17 is a schematic view of a cross-shaped constellation diagram provided by another embodiment of the present disclosure;

FIG. 18 is a schematic view of a cross-shaped constellation diagram provided by another embodiment of the present disclosure;

FIG. 19 is a schematic view of a PAM constellation diagram provided by an embodiment of the present disclosure;

FIG. 20 is a schematic view of a PAM constellation diagram provided by another embodiment of the present disclosure;

FIG. 21 is a schematic view of a third constellation model provided by an embodiment of the present disclosure;

FIG. 22 a schematic view of a third constellation model provided by another embodiment of the present disclosure; and

FIG. 23 is a schematic view of a communication device provided by an embodiment of the present disclosure.

## DETAILED DESCRIPTION

In order to make the objectives, technical schemes and advantages of the present disclosure more apparent, the present disclosure is further described in detail in conjunction with the accompanying drawings and embodiments. It should be understood that the particular embodiments described herein are only intended to explain the present disclosure, and are not intended to limit the present disclosure.

It is to be noted that although a logical order is shown in the flowcharts, the steps shown or described may be performed, in some cases, in a different order from the order shown or described in the flowcharts. In the description and the claims and the brief description of drawings above, "plurality (or multiple)" means two or more; "greater than", "less than", "over", etc. are to be understood to exclude the given figure; and "above", "below", "within", etc. are understood to include the given figure. If there are descriptions using "first", "second", etc., they are only for the purpose of distinguishing technical features, and should not be understood as indicating or implying relative importance or implying the number of the indicated technical features or implying the sequence of the indicated technical features.

The present disclosure provides an information transmission method, a communication device, and a storage medium. Modulation symbols are transmitted by a first communication node to a second communication node in a non-connected state, where the modulation symbols are obtained by modulating $M1 + 1$ bits of information in an information packet according to a first constellation model, or the modulation symbols are obtained by modulating $M2 + 2$ bits of information in an information packet according to a second constellation model, or the modulation symbols are obtained by modulating $M3 + 3$ bits of information in an information packet according to a third constellation model. That is to say, the first communication node may transmit the modulation symbols to the second communication node in a non-connected state, without the need for a series of signaling interaction processes with the second communication node before each information transmission, thereby effectively reducing terminal device power consumption and system signaling overhead. M. Meanwhile, the modulation symbols may be obtained by modulating a plurality of bits of information in an information packet according to the first constellation model, the second constellation model, or the third constellation model, that is, the modulation symbols may carry multiple bits of information, thereby achieving high-order modulation. Moreover, the modulation symbols obtained through modulation according to the first constellation model, the second constellation model, or the third constellation model can improve the robustness of channel estimation, making it easier for the second communication node to extract channel information and improving its demodulation performance. Therefore, the embodiments of the present disclosure enable a large number of first communication nodes to achieve information transmission with high spectral efficiency while reducing terminal device power consumption and system signaling overhead.

The following provides a detailed explanation of how traditional information transmission methods result in significant signaling overhead for systems, such as base stations or access points (APs), and high power consumption for terminal devices.

In related technology, a terminal device (i.e., UE) must be in a connected state to engage in uplink information transmission or uplink data transmission. Here, the connected state is also known as radio resource control (RRC) connected state. However, terminal devices in the connected state typically do not have dedicated uplink transmission resources, so they must first request uplink transmission resources from the system before each information transmission. To achieve this, terminal devices in the connected state send scheduling requests (SRs), buffer status reports (BSRs), and other information to the system before each transmission. Only after obtaining the uplink resource grant from the system, can the terminal device transmit information on the time-frequency resources granted by the system. It can be seen that to complete a traditional uplink information transmission, the terminal device needs to perform many operations beforehand, which undoubtedly increases both terminal device power consumption and system signaling overhead. If an information packet (or data packet) for a single uplink information transmission by a terminal device is not very large, such as in many IoT scenarios and some enhanced mobile broadband (eMBB) scenarios, where the information packet size for a single uplink transmission by a terminal device is only around tens to 200 bytes, requiring the terminal device to follow the operations required before uplink information transmission in existing technology would make the transmission very inefficient.

Further, to save power, terminal devices typically do not maintain a connection with the system when there is no active service (i.e., the terminal device is either not connected to the system or has disconnected), placing the terminal device in a non-connected state. This state can also be referred to as non RRC connected state, connectionless state, connection-free state, or disconnected state. It is understood that the idle state or inactive state can be considered equivalent to the non-connected state. Alternatively, the idle state or inactive state can also be seen as a form of non-connected state.

When a terminal device is in a non-connected state (i.e., it has not yet entered a connected state or established a connection with the system), if it follows the uplink information transmission method from existing technology, it must first establish a connection with the system before transmitting any information. Once in the connected state (also referred to as active state), the terminal device can further request uplink transmission resources from the system (such as a base station or access point) and, after receiving resource grant from the system, can proceed with the actual information transmission process. Transitioning from the non-connected state to the connected state requires a random access procedure, which involves multiple interactions between the terminal device and the base station, for example, including the following steps: the terminal device sends a preamble, also known as Message1; the base station responds with a random access response (RAR), also known as Message2; the terminal device transmits Layer 2 (L2) or Layer 3 (L3) control information, also known as Message3; and the base station sends Message4. The random access procedure undoubtedly significantly increases the power consumption of the terminal device during each information transmission and also greatly raises the signaling overhead for the system.

If the above uplink information transmission method is used, and there are many terminal devices that need to transmit information, with a large number of them needing to enter the connected state before transmission, this will result in many terminal devices undergoing the random access procedure. Consequently, the likelihood of collisions or blockages during the random access procedure will increase, leading to most terminal devices requiring multiple attempts to successfully enter the connected state. Ultimately, to complete the task of information transmission, terminal devices will consume more energy, and the transmission delay will also increase significantly.

Further, another uplink information transmission method in related technology is semi-persistent scheduling (SPS), designed to reduce the physical control signaling overhead and latency associated with small information packet services, which is particularly suitable for periodic services, such as Voice over Internet Protocol (VoIP). In VoIP, during talk spurts, the data rate is essentially constant, with a voice packet generated every 20 ms for example. The average duration of a talk spurt is around 1-2 s, resulting in each talk spurt containing 50 to 100 voice packets. Small-scale fading during this time is compensated for by closed-loop power control to maintain a constant signal-to-noise ratio (SNR) on the receiving side. Therefore, during this period, the modulation and coding scheme (MCS) can remain unchanged, and the allocated physical resources can either stay constant or vary according to fixed rules, eliminating the need for dynamic signaling during uplink information transmission. Additionally, SPS can be viewed as an enhanced form of semi-static configuration, primarily used for periodic small packet services with constant packet sizes. Moreover, SPS generally operates in the RRC connected state, meaning the terminal device has completed the initial random access procedure. Although the scheduling frequency is much lower than the arrival frequency of information packets, SPS is fundamentally non-contending, preventing resource collisions between different terminal devices, such as collisions of pilots (or reference signals). In the 5th generation mobile communication technology (5G) system, the evolved SPS can be utilized in ultra reliable and low latency communication (URLLC) scenarios. This approach not only ensures high reliability but also reduces latency for terminal devices. In this context, the SPS is referred to as configured grant, which means preconfigured resource grant. Configured grant can also be seen as a special form of grant-free or scheduling-free approach, as it eliminates the need for "dynamic grant requests" or "dynamic scheduling requests" for each uplink information transmission. Essentially, configured grant is "dynamic grant-free" or "dynamic scheduling-free". It is understood that under this SPS-style "dynamic scheduling-free" approach, the transmission resources for different terminal devices are essentially preconfigured by the base station, rather than acquired by terminal devices through "contention". Thus, the SPS-style "dynamic scheduling-free" approach can be described as "non-contending". Most importantly, for this type of non-contention, scheduling-free transmission, reference signals can typically be preconfigured by the base station to avoid "collisions". For example, by means of preconfiguration by the base station, it can be ensured that reference signals from terminal devices transmitted on the same time-frequency resources are orthogonal.

Although preconfigured scheduling-free methods such as SPS or configured grant can reduce the overhead of physical control signaling for uplink transmission, the spectral efficiency of the system remains low if the SPS approach is used for information transmission by a large number of terminal devices. For instance, if a terminal device applies for periodic transmission resources for a certain period in one cell but undergoes a handover during this process, it needs to apply for new preconfigured transmission resources in the entered cell while informing the left cell to release its preconfigured transmission resources. Reapplying for new transmission resources in the entered cell is a complicated process that usually requires a random access procedure in the entered cell, which significantly increases the power consumption of the terminal device. Even for fixed terminal devices or nodes, changes in their surrounding environment over time can easily occur, leading to handovers, especially for terminal devices or nodes located at the edge of a cell. Therefore, although the SPS preconfiguration mechanism can achieve grant-free or scheduling-free transmission, it is not suitable for the application scenario of transmitting information by a large number of terminal devices, i.e., it is not suitable for massive connectivity scenarios.

It should be noted that in scenarios where a radio communication system connects with a large number of terminal devices (i.e., massive connectivity scenarios), the radio communication system needs to engage in information transmission with the massive number of terminal devices. Based on the above analysis, traditional information transmission methods require terminal devices to enter a connected state before information transmission. Especially in massive connectivity scenarios, terminal device power consumption will significantly increase, and system signaling overhead will also increase, leading to increased complexity in information transmission and reduced spectral efficiency of the system. Therefore, a method of transmitting information when terminal devices are in a non-connected state plays a crucial role in reducing terminal device power consumption and system signaling overhead.

To enable terminal devices to transmit data or information as energy-efficiently as possible and to save system signaling overhead, it is preferable for terminal devices to remain in a non-connected state, namely the idle state or inactive state, when they have no transmission tasks. In this way, terminal devices can enter a deep sleep mode and shut down all circuits related to transmission. When data or information needs to be sent, terminal devices in a non-connected state (or idle state, or inactive state) can initiate information transmission autonomously and directly without prior establishment of a connection with the system or requesting the base station or access node to allocate uplink transmission resources, i.e., without obtaining grant and scheduling for uplink transmission resources. Since the terminal device completes information transmission in a non-connected state, it does not need to perform connection release after the information transmission is completed and can quickly enter a non-connected or idle state similar to device shutdown (i.e., a deep sleep state). This simplifies information transmission for the terminal device in a non-connected state, improving system spectral efficiency and reducing terminal device power consumption.

Based on the above analysis, the terminal device can independently decide when to transmit information in a non-connected state and directly send it out without notifying the base station (or access point, or system) beforehand or requesting transmission resources from the base station. This also means that the base station does not need to allocate dedicated time-frequency resources for information transmission of each terminal device, or arrange different time-frequency resources for information transmission of each terminal device. Instead, the terminal devices can autonomously transmit information to the base station on a preset public transmission resource. However, since information transmission is autonomously initiated by the terminal devices, the base station cannot control the working terminal devices and the number thereof during each transmission. The base station only needs to detect and decode the transmission information of each terminal device from received signals.

Nevertheless, there are also shortcomings with this non-connected information transmission method. When a terminal device is in a non-connected state, pilots (or reference signals) included in the information transmitted to the base station can be selected or generated autonomously by the terminal device. Here, selecting pilots autonomously refers to determining pilots from a preset pilot set, and generating pilots autonomously refers to the terminal device generating pilots according to preset rules or formulas. Since reference signals are autonomously selected by terminal devices, different terminal devices may choose the same reference signal, leading to potential collisions of reference signals. When there are numerous terminal devices (high overload), the probability of reference signal collisions becomes very high. Once a collision occurs, it becomes difficult for the base station to distinguish between different terminal devices via the reference signals. To reduce collisions and contamination of reference signals, while also performing channel and time-frequency offset estimation, the number of reference signals needs to be multiplied, meaning the reference signal sequences need to be multiplied in length. This results in exponential increases in overhead and a squared increase in detection complexity. Therefore, in scenarios of information transmission in a non-connected state, if traditional pilot schemes are used, it is difficult to ensure the accuracy of channel estimation. This will limit the demodulation performance of the base station and affect the information transmission performance in a non-connected state.

Further, in scenarios where a radio communication system connects with a large number of terminal devices, if the spectral efficiency for information transmission of each terminal device is required to be not too low, it is also necessary to increase the order of the modulation scheme to enhance the spectral efficiency. Here is a detailed explanation of the traditional high-order modulation scheme.

In existing technology, the commonly used high-order modulation scheme is QAM, such as 16 QAM, 32 QAM, 64 QAM, and 256 QAM. Constellation points in a constellation diagram are evenly distributed on a two-dimensional plane (i.e., complex plane), allowing for thorough utilization of the two-dimensional signal space (i.e., two-dimensional signal plane) of complex signals. It is understood that communication signals in a baseband can generally be represented by complex numbers, meaning that communication signals can be divided into I-channel signals and Q-channel signals. Here, the I-channel signal represents the real part, while the Q-channel signal represents the imaginary part. Furthermore, communication signals include modulation symbols, and hence modulation symbols can also be represented by complex numbers. In other words, a modulation symbol can be denoted by a complex number. For instance, the modulation symbol $s$ can be expressed as $a + j * b$, where $j$ represents an imaginary number, i.e., $j = sqrt(-1)$; $a$ is the real part of $s$, indicating transmission of the modulation symbol on the I-channel, while $b$ is the imaginary part of $s$, indicating transmission of the modulation symbol on the Q-channel.

In this embodiment, for 16 QAM in existing technology, the constellation diagram includes 16 points, with the corresponding complex numbers including the following:

$$3 + 3j, 3 + j, 3 - j, 3 - 3j,$$

$$1 + 3j, 1 + j, 1 - j, 1 - 3j,$$

$$-1 + 3j, -1 + j, -1 - j, -1 - 3j,$$

$$-3 + 3j, -3 + j, -3 - j, -3 - 3j$$

It can be seen that within a two-dimensional plane (which can also be referred to as complex plane, complex signal space, or two-dimensional signal space) where the real part ranges from -3 to 3 and the imaginary part ranges from -3 to 3, the constellation points of 16 QAM are evenly distributed. It is understood that the complex plane and the two-dimensional plane are equivalent, so the complex plane or two-dimensional plane can also be termed as two-dimensional complex plane. Here, the real part of a complex number is equivalent to the $x$ coordinate in the two-dimensional plane, and the imaginary part of a complex number is equivalent to the $y$ coordinate in the two-dimensional plane. Therefore, a complex number can also be represented by a point in the two-dimensional plane, for instance, the complex number $a + j * b$ can be denoted by coordinates $(a, b)$ on the two-dimensional plane, where the coordinates $(a, b)$ represent a point in the two-dimensional plane with the $x$ coordinate being $a$ and the $y$ coordinate being $b$. Thus, the 16 points in the 16 QAM constellation diagram can be represented not only by 16 complex numbers but also by 16 two-dimensional coordinate points in the two-dimensional plane. The 16 two-dimensional coordinate points include the following:

$$(3,3), (3,1), (3,-1), (3,-3),$$

$$(1,3), (1,1), (1,-1), (1,-3),$$

$$(-1,3), (-1,1), (-1,-1), (-1,-3),$$

$$(-3,3), (-3,1), (-3,-1), (-3,-3)$$

In this embodiment, when it is necessary to normalize the overall power of the constellation diagram, the entire constellation diagram can be multiplied by a normalization factor (scaling factor). For example, all 16 complex numbers of 16 QAM will be multiplied by the same normalization factor $1/sqrt(40)$. The complex numbers corresponding to the 16 points in the power-normalized 16 QAM constellation diagram include the following:

$1/sqrt(40) * [3 + 3j, 3 + j, 3 - j, 3 - 3j, 1 + 3j, 1 + j, 1 - j, 1 - 3j, -1 + 3j, -1 + j, -1 - j, -1 - 3j, -3 + 3j, -3 + j, -3 - j, -3 - 3j]$

The coordinates corresponding to the 16 points in the power-normalized 16 QAM constellation diagram can be obtained by multiplying the 16 two-dimensional coordinates listed above by $1/sqrt(40)$, that is, by multiplying both $x$ coordinate and $y$ coordinate of each two-dimensional coordinate point by $1/sqrt(40)$.

It is understood that power normalization merely reduces the overall size of the constellation diagram, with the constellation points in the scaled-down constellation diagram remaining evenly distributed.

For other high-order modulation schemes, such as 32 QAM, 64 QAM, 256 QAM, etc., they are similar to the 16 QAM modulation scheme in that the constellation points in the constellation diagram are evenly distributed on a two-dimensional plane. Therefore, the high-order modulation schemes in existing technology can fully utilize the two-dimensional signal space of complex signals. Moreover, the demodulation methods corresponding to these high-order modulation schemes are not only simple but also capable of ensuring performance. As a result, these high-order modulation schemes can easily and efficiently approximate the transmission performance limit, namely the Shannon limit. Thus, in scenarios where there is some requirement for spectral efficiency, these high-order modulation schemes can be widely applied. However, these high-order modulation schemes require accurate channel estimation to ensure performance. If the channel estimation has a significant error, the constellation diagram will undergo distortion, including rotation and scaling, during demodulation at the base station (or access point), resulting in degraded demodulation performance.

Specifically, taking the transmission of modulation symbols using orthogonal frequency division multiplexing (OFDM) (i.e., transmitting modulation symbols using OFDM subcarriers) as an example, after passing through a multipath or frequency-selective channel, the modulation symbols carried on the OFDM subcarriers will be weighted by a complex number (i.e., the frequency-selective channel will cause distortion of the modulation symbols carried on the subcarriers). Alternatively, if there is a significant synchronization error between the transmitting and receiving parties (i.e., between a first communication node and a second communication node), timing offsets (timing skew) and frequency offsets (frequency skew) will also result in the modulation symbols on the subcarriers being weighted by a complex number, meaning that synchronization errors will cause distortion of the modulation symbols.

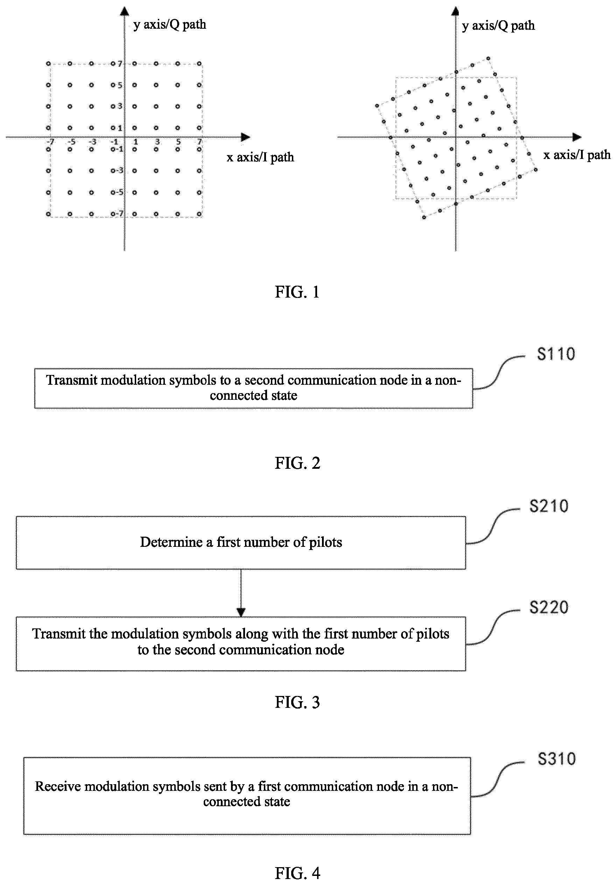

As shown in FIG. 1, further, these distortions occurring on the modulation symbols will accumulate. Taking the transmission of the modulation symbol $s$ via OFDM as an example, assume that the complex weight of the modulation symbol $s$ on the OFDM subcarriers caused by the frequency-selective channel is $g1$, and the complex weight of the modulation symbol caused by timing or frequency skew is $g2$, if both the problem resulted from the frequency-selective channel and the synchronization errors exist simultaneously, it is equivalent to weighting the modulation symbol with a weighted value h, where $h = g1 * g2$, that is, the received modulation symbol is $y = h * s + n = g1 * g2 * s + n$, where $n$ denotes additive white gaussian noise (AWGN). If the receiving side (i.e., the second communication node) cannot remove the distortions on the modulation symbol, that is, cannot equalize the weighted value $h$ of the modulation symbol, then the modulation symbol will be rotated and scaled. Even slight rotation and scaling of modulation symbols can severely limit the performance of high-order modulation schemes. Each small dot in FIG. 1 corresponds to a modulation symbol. The constellation diagram corresponding to the left coordinate system in FIG. 1 is a standard constellation diagram for 64 QAM modulation symbols, while the constellation diagram corresponding to the right coordinate system in FIG. 1 is a constellation diagram for 64 QAM modulation symbols weighted by a weighted value (i.e., a rotation and scaling factor), that is, a constellation diagram for 64 QAM modulation symbols experiencing channel distortions. If the receiving side directly demodulates the constellation diagram corresponding to the right coordinate system in FIG. 1, the demodulation performance will be affected even if the AWGN at the receiving side is very small. Therefore, in traditional high spectral efficiency scenarios, pilots are typically utilized to estimate the weighted values (i.e., distortions) of modulation symbols. This involves estimating $h$ from the received modulation symbol $y = h * s + n = g1 * g2 * s + n$ and then equalizing the weighted value by dividing $y$ by $h$, that is, $y/h = s + n/h$, thereby obtaining a constellation diagram $s + n'$ that is free from distortions and only affected by AWGN. This results in better demodulation performance. Here, $n' = n/h$. The above pilot scheme enables the system to support more terminal accesses, making it highly suitable for massive connectivity scenarios. However, this pilot scheme requires the receiving side to perform channel estimation based on the characteristics of the modulation symbols themselves. Traditional high-order modulation schemes have overly dense constellation diagrams, which hinders the extraction of channel information through the modulation symbols by the receiving side.

It is understood that in scenarios where a massive number of terminal devices are in a non-connected state (i.e., not connected to the radio communication system) and directly engage in information transmission with the radio communication system, as well as in scenarios involving information transmission based on SPS by a massive number of terminal devices, it is difficult to accurately estimate the complex weights (i.e., distortions) of modulation symbols using pilots. As a result, the performance of high-order modulation schemes is severely constrained.

Based on the above situation, the present disclosure provides an information transmission method that can reduce terminal device power consumption and system signaling overhead, while also enhancing the robustness of channel estimation. This ensures the accuracy of channel information extracted through modulation symbols by a receiving side, allowing for good demodulation performance even when pilot capabilities are limited. It ensures efficient information transmission in a non-connected state, thereby supporting high spectral efficiency information transmission in massive connectivity scenarios.

Referring to Fig. 2, which is a flowchart of an information transmission method provided by an embodiment of the present disclosure. The information transmission method is applied to a first communication node, and the information transmission method may include, but is not limited to, step S110.

In S110, modulation symbols are transmitted to a second communication node in a non-connected state.

The modulation symbols are obtained by modulating $M1 + 1$ bits of information in an information packet according to a first constellation model, the first constellation model contains $2 * N1$ constellation points, $M1$ is an integer greater than or equal to 1, and $N1$ and $M1$ satisfy $N1 = 2^{M1}$;

complex representations corresponding to the $2 * N1$ constellation points in the first constellation model are as follows:

$$a_1 e^{j\theta}, a_2 e^{j\theta}, \cdots, a_{N1} e^{j\theta},$$

$$a_1 e^{j(\theta+\pi)}, a_2 e^{j(\theta+\pi)}, \cdots, a_{N1} e^{j(\theta+\pi)};$$

$\pi$ represents pi; $j$ represents an imaginary number; a value of $j$ is $\sqrt{-1}$; $e$ represents a natural logarithm; $\theta$ represents a real number; $a_1, a_2, \cdots, a_{N1}$ are all positive numbers and satisfy $0 < a_1 < a_2 < \cdots < a_{N1}$;
alternatively,
the modulation symbols are obtained by modulating $M2 + 2$ bits of information in the information packet according to a second constellation model, the second constellation model contains $4 * N2$ constellation points, $M2$ is an integer greater than or equal to 1, and $N2$ and $M2$ satisfy $N2 = 2^{M2}$;
complex representations corresponding to the $4 * N2$ constellation points in the second constellation model are as follows:

$$a_1 e^{j\theta}, a_2 e^{j\theta}, \cdots, a_{N2} e^{j\theta},$$

$$b_1 e^{j(\theta+\pi/2)}, b_2 e^{j(\theta+\pi/2)}, \cdots, b_{N2} e^{j(\theta+\pi/2)},$$

$$a_1 e^{j(\theta+\pi)}, a_2 e^{j(\theta+\pi)}, \cdots, a_{N2} e^{j(\theta+\pi)},$$

$$b_1 e^{j(\theta+3\pi/2)}, b_2 e^{j(\theta+3\pi/2)}, \cdots, b_{N2} e^{j(\theta+3\pi/2)};$$

$\pi$ represents pi; $j$ represents an imaginary number; a value of $j$ is $\sqrt{-1}$; $e$ represents a natural logarithm; $\theta$ represents a real number; $a_1, a_2, \cdots, a_{N2}$ and $b_1, b_2, \cdots, b_{N2}$ are all positive numbers and satisfy $0 < a_1 < a_2 < \cdots < a_{N2}$, $0 < b_1 < b_2 < \cdots < b_{N2}$;
alternatively,
the modulation symbols are obtained by modulating $M3 + 3$ bits of information in the information packet according to a third constellation model, the third constellation model contains $8 * N3$ constellation points, $M3$ is an integer greater than or equal to 0, and $N3$ and $M3$ satisfy $N3 = 2^{M3}$;
complex representations corresponding to the $8 * N3$ constellation points in the third constellation model are as follows:

$$a_1 e^{j\theta}, a_2 e^{j\theta}, \cdots, a_{N3} e^{j\theta},$$

$$b_1 e^{j\left(\theta+\frac{\pi}{4}\right)}, b_2 e^{j\left(\theta+\frac{\pi}{4}\right)}, \cdots, b_{N3} e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_{N3} e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_{N3} e^{j\left(\theta+\frac{3\pi}{4}\right)},$$

$$a_1 e^{j(\theta+\pi)}, a_2 e^{j(\theta+\pi)}, \cdots, a_{N3} e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_{N3} e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_{N3} e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_{N3} e^{j\left(\theta+\frac{7\pi}{4}\right)};$$

$\pi$ represents pi; $j$ represents an imaginary number; a value of $j$ is $\sqrt{-1}$; $e$ represents a natural logarithm; $\theta$ represents a real number; $a_1, a_2, \cdots, a_{N3}$ and $b_1, b_2, \cdots, b_{N3}$ are all positive numbers and satisfy $0 < a_1 < a_2 < \cdots < a_{N3}$, $0 < b_1 < b_2 < \cdots < b_{N3}$.

In this embodiment, by adopting the information transmission method including the above step S110, the first communication node may transmit the modulation symbols to the second communication node in a non-connected state, without the need for a series of signaling interaction processes with the second communication node before each information transmission, thereby effectively reducing terminal device power consumption and system signaling overhead. Meanwhile, the modulation symbols may be obtained by modulating a plurality of bits of information in an information packet according to the first constellation model, the second constellation model, or the third constellation model, that is, the modulation symbols may carry multiple bits of information, thereby achieving high-order modulation. Moreover, the modulation symbols obtained through modulation according to the first constellation model, the second constellation model, or the third constellation model can improve the robustness of channel estimation, making it easier for the second communication node to extract channel information and improving its demodulation performance. Therefore, the embodiments of the present disclosure enable a large number of first communication nodes to achieve high spectral efficiency information transmission while reducing terminal device power consumption and system signaling overhead.

In a feasible implementation, in response to the modulation symbols being obtained through modulation based on the first constellation model, $a_1, a_2, \cdots, a_{N1}$ are expressed using the following formula:

$$a_n = (2n - 1 + \Delta)d;$$

where values of $n$ include 1,2,..., $N1$; that is, $a_n$ may be $a_1$, or $a_2$, or $a_3$, or $a_{N1}$ and so on.

Further, $d$ represents a positive real number, and $\Delta$ represents a real number greater than or equal to 0, making $a_1, a_2, \cdots, a_{N1}$ an arithmetic sequence.

Further, in response to a value of $\Delta$ being 0, and a value of $d$ being 1, $a_n$ satisfies $a_n = 2n - 1$; in response to a value of $\Delta$ being 1, and a value of $d$ being 1/2, $a_n$ satisfies $a_n = n$; and in response to a value of $\Delta$ being 3, and a value of $d$ being 1/2, $a_n$ satisfies $a_n = n + 1$.

Alternatively, a value of $\Delta$ may be $\Delta = \sqrt{2} - 1$, and in this case, in response to a value of $d$ being 1, $a_n$ satisfies $a_n = 2n - 2 + \sqrt{2}$; and in response to a value of $d$ being 1/2, $a_n$ satisfies $a_n = n - 1 + \sqrt{2}/2$.

In a feasible implementation, in response to the modulation symbols being obtained through modulation based on the second constellation model, $a_1, a_2, \cdots, a_{N2}$ are expressed using the following formula:

$$a_n = (2n - 1 + \Delta)d;$$

$b_1, b_2, \cdots, b_{N2}$ are expressed using the following formula:

$$b_n = a_n + \beta;$$

where values of $n$ include 1,2,..., $N2$; that is, $a_n$ may be or $a_2$, or $a_3$, or $a_{N2}$ and so on. Similarly, $b_n$ may be $b_1$, or $b_2$, or $b_3$, or $b_{N2}$ and so on.

Further, $d$ represents a positive real number, and $\Delta$ and $\beta$ both represent real numbers greater than or equal to 0, making $a_1, a_2, \cdots, a_{N2}$ an arithmetic sequence and $b_1, b_2, \cdots, b_{N2}$ an arithmetic sequence.

Further, in response to a value of $\Delta$ being 0, and a value of $d$ being 1, $a_n$ satisfies $a_n = 2n - 1$; in response to a value

of $\Delta$ being 1, and a value of $d$ being 1/2, $a_n$ satisfies $a_n = n$; and in response to a value of $\Delta$ being 3, and a value of $d$ being 1/2, $a_n$ satisfies $a_n = n + 1$.

Alternatively, a value of $\Delta$ may be $\Delta = \sqrt{2} - 1$, and in this case, in response to a value of $d$ being 1, $a_n$ satisfies $a_n = 2n - 2 + \sqrt{2}$; and in response to a value of $d$ being 1/2, $a_n$ satisfies $a_n = n - 1 + \frac{\sqrt{2}}{2}$.

In a feasible implementation, in response to the modulation symbols being obtained through modulation based on the third constellation model, $a_1, a_2, \cdots, a_{N3}$ are expressed using the following formula:

$$a_n = (2n - 1 + \Delta)d;$$

$b_1, b_2, \cdots, b_{N3}$ are expressed using the following formula:

$$b_n = a_n + \beta;$$

where values of $n$ include 1,2,..., N3; that is, $a_n$ may be $a_1$, or $a_2$, or $a_3$, or $a_{N3}$ and so on. Similarly, $b_n$ may be $b_1$, or $b_2$, or $b_3$, or $b_{N3}$ and so on.

Further, $d$ represents a positive real number, and $\Delta$ and $\beta$ both represent real numbers greater than or equal to 0, making $a_1, a_2, \cdots, a_{N3}$ an arithmetic sequence and $b_1, b_2, \cdots, b_{N3}$ an arithmetic sequence.

Further, in response to a value of $\Delta$ being 0, and a value of $d$ being 1, $a_n$ satisfies $a_n = 2n - 1$; in response to a value of $\Delta$ being 1, and a value of $d$ being 1/2, $a_n$ satisfies $a_n = n$; in response to a value of $\Delta$ being 3, and a value of $d$ being 1/2, $a_n$ satisfies $a_n = n + 1$.

Alternatively, a value of $\Delta$ may be $\Delta = \sqrt{2} - 1$, and in this case, in response to a value of $d$ being 1, $a_n$ satisfies $a_n = 2n - 2 + \sqrt{2}$; and in response to a value of $d$ being 1/2, $a_n$ satisfies $a_n = n - 1 + \frac{\sqrt{2}}{2}$.

In a feasible implementation, in response to the modulation symbols being obtained through modulation based on the second constellation model or the third constellation model, $\beta$ equals 0.

In a feasible implementation, in response to the modulation symbols being obtained through modulation based on the third constellation model, $\beta$ is greater than 0.

In a feasible implementation, in response to the modulation symbols being obtained through modulation based on the first constellation model, $d$ is configured with a value that makes an average power of the modulation symbols, obtained through modulation based on the first constellation model, equal to 1. It is understood that the value of $d$ is such that the average power of the modulation symbols obtained through modulation based on the first constellation model is equal to 1. In other words, the value of $d$ ensures that the mean of the squared magnitudes of the constellation points in the first constellation model is 1. Alternatively, it can be said that the value of $d$ is selected to ensure that the average power of the first constellation model is 1. No specific restrictions are placed on this value here.

In a feasible implementation, in response to the modulation symbols being obtained through modulation based on the second constellation model, $d$ is configured with a value that makes an average power of the modulation symbols, obtained through modulation based on the second constellation model, equal to 1. It is understood that the value of $d$ is such that the average power of the modulation symbols obtained through modulation based on the second constellation model is equal to 1. In other words, the value of $d$ ensures that the mean of the squared magnitudes of the constellation points in the second constellation model is 1. Alternatively, it can be said that the value of $d$ is selected to ensure that the average power of the second constellation model is 1. No specific restrictions are placed on this value here.

In a feasible implementation, in response to the modulation symbols being obtained through modulation based on the third constellation model, $d$ is configured with a value that makes an average power of the modulation symbols, obtained through modulation based on the third constellation model, equal to 1. It is understood that the value of $d$ is such that the average power of the modulation symbols obtained through modulation based on the third constellation model is equal to 1. In other words, the value of $d$ ensures that the mean of the squared magnitudes of the constellation points in the third constellation model is 1. Alternatively, it can be said that the value of $d$ is selected to ensure that the average power of the third constellation model is 1. No specific restrictions are placed on this value here.

In a feasible implementation, a value of $\theta$ may be 0; alternatively, a value of $\theta$ may be $\pi/4$, that is, $\theta = \pi/4$; or a value of $\theta$ may be $\pi/8$, that is, $\theta = \pi/8$. No specific restrictions are imposed here.

In a feasible implementation, S110 is further explained. S110 may include the following step: the modulation symbols are transmitted to the second communication node over a preset public channel.

It is understood that, in scenarios of information transmission in a non-connected state, the second communication node does not need to allocate dedicated time-frequency resources for information transmission of each first communication node, or put differently, it does not need to arrange different time-frequency resources for information transmission of each first communication node. The second communication node may preconfigure a common channel, which may be used for transmitting modulation symbols. For example, a common channel may be configured through broadcast information, and all first communication nodes are notified to transmit modulation symbols over this common channel. In other words, the first communication nodes do not need to establish a connection with the second communication node in advance, nor do they need to request the second communication node to allocate uplink transmission resources. Instead, they can initiate information transmission to the second communication node by autonomously sending modulation symbols. This simplifies the operation of information transmission for the first communication nodes, thereby reducing the power consumption generated by the first communication nodes and decreasing the signaling overhead of the second communication node.

In a feasible implementation, S110 is further explained. S110 may include the following step:
the modulation symbols are transmitted to the second communication node over a preset public channel using target transmission resources, with the target transmission resources being determined by the first communication node.

It is understood that, in scenarios of information transmission in a non-connected state, the second communication node may preconfigure a public channel. For instance, a public channel may be configured through broadcast information, and all first communication nodes are notified to transmit resources over this common channel. The first communication nodes do not need to establish a connection with the second communication node in advance, nor do they need to request the second communication node to allocate uplink transmission resources. Instead, they can autonomously determine the target transmission resources and use them to transmit modulation symbols to the second communication node. In other words, the first communication nodes can initiate information transmission to the second communication node by autonomously sending modulation symbols. This simplifies the operation of information transmission for the first communication nodes, thereby reducing the power consumption generated by the first communication nodes and decreasing the signaling overhead of the second communication node.

Referring to FIG. 3, in a feasible implementation, S110 is further explained. S110 may include, but is not limited to, steps S210 and S220.

In S210, a first number of pilots are determined.

It is understood that a pilot may be referred to as a pilot signal, a reference signal (RS), a demodulation reference signal, or a preamble. From a formal perspective, a pilot is usually a sequence or a series of symbols, so it is also known as a pilot sequence. Therefore, a plurality of pilots may Referring to two or more pilot sequences. No specific restrictions are imposed here.

In S220, the modulation symbols along with the first number of pilots are transmitted to the second communication node.

Here, a value of the first number is greater than 1, meaning the value of the first number may be 2, 3, or other values, without specific restrictions here.

In this embodiment, by adopting the information transmission method including the aforementioned steps S210 and S220, the first communication node first determines the first number of pilots and then sends the modulation symbols and the first number of pilots to the second communication node. This allows the second communication node to estimate some channel information from the pilots and further extract channel information from the modulation symbols. This can reduce the number of pilots, decrease the probability of pilot collisions, make it easier for the second communication node to extract channel information, and effectively improve the demodulation performance of the second communication node.

It is understood that in scenarios where a massive number of first communication nodes directly engage in information transmission with the second communication node in a non-connected state, the first communication nodes transmit the modulation symbols and the first number of pilots together to the second communication node. This can reduce pilot overhead, improve the robustness of channel estimation, and enable the second communication node to maintain good demodulation performance even when pilot capabilities are limited, ensuring efficient information transmission between the first communication nodes and the second communication node in a non-connected state.

In a feasible implementation, in response to the value of the first number being greater than or equal to 2, the first number of pilots are mutually independent, meaning the first number of pilots are not associated or correlated with each other. Here, the technique of including a plurality of pilots in one transmission and having the pilots be unrelated or mutually independent is called independent multi-pilot technology, and the plurality of independent pilots are referred to as independent multi-pilots.

It is understood that the information transmission between the first communication nodes and the second communication node may adopt the independent multi-pilot technology. In this way, under the same pilot overhead, the probability of collisions among independent multi-pilots of different first communication nodes will be smaller than that of traditional single-pilot collisions. Therefore, in the transmission scenario under a non-connected state, the independent multi-pilot technology may be adopted to support more first communication nodes for information transmission.

In a feasible implementation, in response to the value of the first number being greater than or equal to 2, the first number of pilots are determined based on information in the information packet.

In a feasible implementation, in response to the value of the first number being greater than or equal to 2, the first number of pilots are determined based on one or more bits of information in the information packet.

In this embodiment, one pilot may be determined based on one bit of information in the information packet; alternatively, one pilot may be determined based on two bits of information in the information packet; alternatively, two pilots may both be determined based on one bit of information in the information packet, etc. The embodiment of the present disclosure does not limit the first number and the number of bits of information.

In a feasible implementation, in response to the value of the first number being greater than or equal to 2, each of the pilots is determined from a preset pilot set based on a second number of bits of information in the information packet. Here, the preset pilot set includes a third number of pilots, and the second number has a logarithmic function relationship with the third number, with a logarithm base of 2.

In this embodiment, the pilots transmitted by the first communication node to the second communication node are autonomously selected by the first communication node, i.e., the first communication node determines the pilots from the preset pilot set. The preset pilot set includes a third number of pilots, and the second number has a logarithmic function relationship with the third number, with a logarithm base of 2. For example, assuming the third number is D, then the second number is $\log_2(D)$, i.e., each pilot is determined from the preset pilot set based on $\log_2(D)$ bits of information in the information packet, without specific restrictions here. It is understood that the third number may be 64, 128, or more, without specific restrictions here.

In a feasible implementation, the information transmission method further includes the following step:
during the process of transmitting the modulation symbols to the second communication node in a non-connected state, no pilots are transmitted.

It is understood that the first communication node merely transmits modulation symbols to the second communication node in a non-connected state, without transmitting pilots. Channel estimation is achieved through modulation symbols, which can save the overhead required for pilots and ensure efficient information transmission between the first communication node and the second communication node in a non-connected state. This enables a large number of first communication nodes to achieve high spectral efficiency information transmission.

Further, FIG. 4 illustrates an information transmission method provided by another embodiment of the present disclosure. The information transmission method is applied to a second communication node, and the information transmission method may include, but is not limited to, step S310.

In S310, modulation symbols sent by a first communication node in a non-connected state are received.

The modulation symbols are obtained by modulating $M1 + 1$ bits of information in an information packet according to a first constellation model, the first constellation model contains $2 * N1$ constellation points, $M1$ is an integer greater than or equal to 1, and $N1$ and $M1$ satisfy $N1 = 2^{M1}$;

complex representations corresponding to the $2 * N1$ constellation points in the first constellation model are as follows:

$$a_1 e^{j\theta}, a_2 e^{j\theta}, \cdots, a_{N1} e^{j\theta},$$

$$a_1 e^{j(\theta+\pi)}, a_2 e^{j(\theta+\pi)}, \cdots, a_{N1} e^{j(\theta+\pi)};$$

$\pi$ represents pi; $j$ represents an imaginary number; a value of $j$ is $\sqrt{-1}$; $e$ represents a natural logarithm; $\theta$ represents a real number; $a_1, a_2, \cdots, a_{N1}$ are all positive numbers and satisfy $0 < a_1 < a_2 < ... < a_{N1}$;
alternatively,
the modulation symbols are obtained by modulating $M2 + 2$ bits of information in the information packet according to a second constellation model, the second constellation model contains $4 * N2$ constellation points, $M2$ is an integer greater than or equal to 1, and $N2$ and $M2$ satisfy $N2 = 2^{M2}$;
complex representations corresponding to the $4 * N2$ constellation points in the second constellation model are as follows:

$$a_1 e^{j\theta}, a_2 e^{j\theta}, \cdots, a_{N2} e^{j\theta},$$

$$b_1 e^{j(\theta+\pi/2)}, b_2 e^{j(\theta+\pi/2)}, \cdots, b_{N2} e^{j(\theta+\pi/2)},$$

$$a_1 e^{j(\theta+\pi)}, a_2 e^{j(\theta+\pi)}, \cdots, a_{N2} e^{j(\theta+\pi)},$$

$$b_1 e^{j(\theta+3\pi/2)}, b_2 e^{j(\theta+3\pi/2)}, \cdots, b_{N2} e^{j(\theta+3\pi/2)};$$

$\pi$ represents pi; $j$ represents an imaginary number; a value of $j$ is $\sqrt{-1}$; e represents a natural logarithm; $\theta$ represents a real number; $a_2, \cdots, a_{N2}$ and $b_1, b_2, \cdots, b_{N2}$ are all positive numbers and satisfy $0 < a_1 < a_2 < \cdots < a_{N2}$, $0 < b_1 < b_2 < \cdots < b_{N2}$;

alternatively,

the modulation symbols are obtained by modulating $M3 + 3$ bits of information in the information packet according to a third constellation model, the third constellation model contains $8 * N3$ constellation points, $M3$ is an integer greater than or equal to 0, and $N3$ and $M3$ satisfy $N3 = 2^{M3}$;

complex representations corresponding to the $8 * N3$ constellation points in the third constellation model are as follows:

$$a_1 e^{j\theta}, a_2 e^{j\theta}, \cdots, a_{N3} e^{j\theta},$$

$$b_1 e^{j\left(\theta+\frac{\pi}{4}\right)}, b_2 e^{j\left(\theta+\frac{\pi}{4}\right)}, \cdots, b_{N3} e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_{N3} e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_{N3} e^{j\left(\theta+\frac{3\pi}{4}\right)},$$

$$a_1 e^{j(\theta+\pi)}, a_2 e^{j(\theta+\pi)}, \cdots, a_{N3} e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_{N3} e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_{N3} e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_{N3} e^{j\left(\theta+\frac{7\pi}{4}\right)};$$

$\pi$ represents pi; $j$ represents an imaginary number; a value of $j$ is $\sqrt{-1}$; e represents a natural logarithm; $\theta$ represents a real number; $a_2, \cdots, a_{N3}$ and $b_1, b_2, \cdots, b_{N3}$ are all positive numbers and satisfy $0 < a_1 < a_2 < \cdots < a_{N3}$, $0 < b_1 < b_2 < \cdots < b_{N3}$.

In this embodiment, by adopting the information transmission method including the above step S310, the second communication node may receive the modulation symbols sent by the first communication node in a non-connected state, meaning the first communication node does not need to engage in a series of signaling interaction processes with the second communication node before each information transmission, thereby effectively reducing terminal device power consumption and system signaling overhead. Meanwhile, the modulation symbols may be obtained by modulating a plurality of bits of information in an information packet according to the first constellation model, the second constellation model, or the third constellation model, that is, the modulation symbols may carry multiple bits of information, thereby achieving high-order modulation. Moreover, the modulation symbols obtained through modulation according to the first constellation model, the second constellation model, or the third constellation model can improve the robustness of channel estimation, making it easier for the second communication node to extract channel information and improving its demodulation performance. Therefore, the embodiments of the present disclosure enable a large number of first communication nodes to achieve high spectral efficiency information transmission while reducing terminal device power consumption and system signaling overhead.

In a feasible implementation, in response to the modulation symbols being obtained through modulation based on the first constellation model, $a_1, a_2, \cdots, a_{N1}$ are expressed using the following formula:

$$a_n = (2n - 1 + \Delta)d;$$

where values of $n$ include 1,2,..., $N1$; that is, $a_n$ may be $a_1$, or $a_2$, or $a_3$, or $a_{N1}$ and so on.

Further, $d$ represents a positive real number, and $\Delta$ represents a real number greater than or equal to 0, making $a_1$, $a_2$, $\cdots$, $a_{N1}$ an arithmetic sequence.

Further, in response to a value of $\Delta$ being 0, and a value of $d$ being 1, $a_n$ satisfies $a_n = 2n$ - 1; in response to a value of $\Delta$ being 1, and a value of $d$ being 1/2, $a_n$ satisfies $a_n = n$; and in response to a value of $\Delta$ being 3, and a value of $d$ being 1/2, $a_n$ satisfies $a_n = n + 1$.

Alternatively, a value of $\Delta$ may be $\Delta = \sqrt{2} - 1$, and in this case, in response to a value of $d$ being 1, $a_n$ satisfies $a_n = 2n - 2 + \sqrt{2}$; and in response to a value of $d$ being 1/2, $a_n$ satisfies $a_n = n$ - 1 + $\sqrt{2}/2$.

In a feasible implementation, in response to the modulation symbols being obtained through modulation based on the second constellation model, $a_1$, $a_2$, $\cdots$, $a_{N2}$ are expressed using the following formula:

$$a_n = (2n - 1 + \Delta)d;$$

$b_1$, $b_2$, $\cdots$, $b_{N2}$ are expressed using the following formula:

$$b_n = a_n + \beta;$$

where values of $n$ include 1,2, ... , $N2$; that is, $a_n$ may be or $a_2$, or $a_3$, or $a_{N2}$ and so on. Similarly, $b_n$ may be $b_1$, or $b_2$, or $b_3$, or $b_{N2}$ and so on.

Further, $d$ represents a positive real number, and $\Delta$ and $\beta$ both represent real numbers greater than or equal to 0, making $a_1$, $a_2$, $\cdots$, $a_{N2}$ an arithmetic sequence and $b_1$, $b_2$, $\cdots$, $b_{N2}$ an arithmetic sequence.

Further, in response to a value of $\Delta$ being 0, and a value of $d$ being 1, $a_n$ satisfies $a_n = 2n$ - 1; in response to a value of $\Delta$ being 1, and a value of $d$ being 1/2, $a_n$ satisfies $a_n = n$; and in response to a value of $\Delta$ being 3, and a value of $d$ being 1/2, $a_n$ satisfies $a_n = n + 1$.

Alternatively, a value of $\Delta$ may be $\Delta = \sqrt{2} - 1$, and in this case, in response to a value of $d$ being 1, $a_n$ satisfies $a_n = 2n - 2 + \sqrt{2}$; and in response to a value of $d$ being 1/2, $a_n$ satisfies $a_n = n$ - 1 + $\sqrt{2}/2$.

In a feasible implementation, in response to the modulation symbols being obtained through modulation based on the third constellation model, $a_1$, $a_2$, $\cdots$, $a_{N3}$ are expressed using the following formula:

$$a_n = (2n - 1 + \Delta)d;$$

$b_1$, $b_2$, $\cdots$, $b_{N3}$ are expressed using the following formula:

$$b_n = a_n + \beta;$$

where values of $n$ include 1,2, ... , $N3$; that is, $a_n$ may be $a_1$, or $a_2$, or $a_3$, or $a_{N3}$ and so on. Similarly, $b_n$ may be $b_1$, or $b_2$, or $b_3$, or $b_{N3}$ and so on.

Further, $d$ represents a positive real number, and $\Delta$ and $\beta$ both represent real numbers greater than or equal to 0, making $a_1$, $a_2$, $\cdots$, $a_{N3}$ an arithmetic sequence and $b_1$, $b_2$, $\cdots$, $b_{N3}$ an arithmetic sequence.

Further, in response to a value of $\Delta$ being 0, and a value of $d$ being 1, $a_n$ satisfies $a_n = 2n$ - 1; in response to a value of $\Delta$ being 1, and a value of $d$ being 1/2, $a_n$ satisfies $a_n = n$; in response to a value of $\Delta$ being 3, and a value of $d$ being 1/2, $a_n$ satisfies $a_n = n + 1$.

Alternatively, a value of $\Delta$ may be $\Delta = \sqrt{2} - 1$, and in this case, in response to a value of $d$ being 1, $a_n$ satisfies $a_n = 2n - 2 + \sqrt{2}$; and in response to a value of d being 1/2, $a_n$ satisfies $a_n = n$ - 1 + $\sqrt{2}/2$.

In a feasible implementation, in response to the modulation symbols being obtained through modulation based on the second constellation model or the third constellation model, $\beta$ equals 0.

In a feasible implementation, in response to the modulation symbols being obtained through modulation based on the third constellation model, $\beta$ is greater than 0.

In a feasible implementation, in response to the modulation symbols being obtained through modulation based on the first constellation model, $d$ is configured with a value that makes an average power of the modulation symbols,

obtained through modulation based on the first constellation model, equal to 1. It is understood that the value of $d$ is such that the average power of the modulation symbols obtained through modulation based on the first constellation model is equal to 1. In other words, the value of $d$ ensures that the mean of the squared magnitudes of the constellation points in the first constellation model is 1. Alternatively, it can be said that the value of $d$ is selected to ensure that the average power of the first constellation model is 1. No specific restrictions are placed on this value here.

In a feasible implementation, in response to the modulation symbols being obtained through modulation based on the second constellation model, $d$ is configured with a value that makes an average power of the modulation symbols, obtained through modulation based on the second constellation model, equal to 1. It is understood that the value of $d$ is such that the average power of the modulation symbols obtained through modulation based on the second constellation model is equal to 1. In other words, the value of $d$ ensures that the mean of the squared magnitudes of the constellation points in the second constellation model is 1. Alternatively, it can be said that the value of $d$ is selected to ensure that the average power of the second constellation model is 1. No specific restrictions are placed on this value here.

In a feasible implementation, in response to the modulation symbols being obtained through modulation based on the third constellation model, $d$ is configured with a value that makes an average power of the modulation symbols, obtained through modulation based on the third constellation model, equal to 1. It is understood that the value of $d$ is such that the average power of the modulation symbols obtained through modulation based on the third constellation model is equal to 1. In other words, the value of $d$ ensures that the mean of the squared magnitudes of the constellation points in the third constellation model is 1. Alternatively, it can be said that the value of $d$ is selected to ensure that the average power of the third constellation model is 1. No specific restrictions are placed on this value here.

In a feasible implementation, a value of $\theta$ may be 0; alternatively, a value of $\theta$ may be $\pi/4$, that is, $\theta = \pi/4$; or a value of $\theta$ may be $\pi/8$, that is, $\theta = \pi/8$. No specific restrictions are imposed here.

In a feasible implementation, S310 is further explained. S310 may include the following step:
modulation symbols sent by a first communication node in a non-connected state over a preset public channel are received.

It is understood that, in scenarios of information transmission in a non-connected state, the second communication node does not need to allocate dedicated time-frequency resources for information transmission of each first communication node, or put differently, it does not need to arrange different time-frequency resources for information transmission of each first communication node. The second communication node may preconfigure a common channel, which may be used for transmitting modulation symbols. For example, a common channel may be configured through broadcast information, and all first communication nodes are notified to transmit modulation symbols over this common channel. In other words, the first communication nodes do not need to establish a connection with the second communication node in advance, nor do they need to request the second communication node to allocate uplink transmission resources. The second communication node may receive modulation symbols sent by the first communication node over a preset public channel in a non-connected state and engage in information transmission with the first communication node, that is, the first communication node initiates information transmission to the second communication node. This simplifies the operation of information transmission for the first communication nodes, thereby reducing the power consumption generated by the first communication nodes and decreasing the signaling overhead of the second communication node.

In a feasible implementation, S310 is further explained. S310 may include the following step:
modulation symbols sent by a first communication node in a non-connected state over a preset public channel using target transmission resources are received, with the target transmission resources being determined by the first communication node.

It is understood that, in scenarios of information transmission in a non-connected state, the second communication node may preconfigure a public channel. For instance, a public channel may be configured through broadcast information, and all first communication nodes are notified to transmit resources over this common channel. The first communication nodes do not need to establish a connection with the second communication node in advance, nor do they need to request the second communication node to allocate uplink transmission resources. In a non-connected state, the first communication node may autonomously determine target transmission resources. The second communication node receives modulation symbols sent by the first communication node using the target transmission resources over a preset public channel and engages in information transmission with the first communication node. In other words, the first communication nodes can initiate information transmission to the second communication node by autonomously sending modulation symbols. This simplifies the operation of information transmission for the first communication nodes, thereby reducing the power consumption generated by the first communication nodes and decreasing the signaling overhead of the second communication node.

In a feasible implementation, S310 is further explained. S310 may include the following step:
modulation symbols and a first number of pilots sent by a first communication node in a non-connected state are received. Here, the first number is greater than 1.

Here, a value of the first number is greater than 1, meaning the value of the first number may be 2, 3, or other values, without specific restrictions here.

In this embodiment, when the first communication node is in a non-connected state, the second communication node receives the modulation symbols and the first number of pilots sent by the first communication node, allowing it to estimate some channel information from the pilots and further extract channel information from the modulation symbols. This can reduce the number of pilots, decrease the probability of pilot collisions, make it easier for the second communication node to extract channel information, and effectively improve the demodulation performance of the second communication node.

It is understood that in scenarios where a massive number of first communication nodes directly engage in information transmission with the second communication node in a non-connected state, the second communication node receives the modulation symbols and the pilots sent by the first communication node. This can reduce pilot overhead, improve the robustness of channel estimation, and enable the second communication node to maintain good demodulation performance even when pilot capabilities are limited, ensuring efficient information transmission between the first communication nodes and the second communication node in a non-connected state.

In a feasible implementation, in response to the value of the first number being greater than or equal to 2, the first number of pilots are mutually independent, meaning the first number of pilots are not associated or correlated to each other. Here, the technique of including a plurality of pilots in one transmission and having the pilots be unrelated or mutually independent is called independent multi-pilot technology, and the plurality of independent pilots are referred to as independent multi-pilots.

It is understood that the information transmission between the first communication nodes and the second communication node may adopt the independent multi-pilot technology. In this way, under the same pilot overhead, the probability of collisions among independent multi-pilots of different first communication nodes will be smaller than that of traditional single-pilot collisions. Therefore, in the transmission scenario under a non-connected state, the independent multi-pilot technology may be adopted to support more first communication nodes for information transmission.

In a feasible implementation, in response to the value of the first number being greater than or equal to 2, the first number of pilots are determined based on information in the information packet.

In this embodiment, one pilot may be determined based on one bit of information in the information packet; alternatively, one pilot may be determined based on two bits of information in the information packet; alternatively, two pilots may both be determined based on one bit of information in the information packet, etc. The embodiments of the present disclosure do not limit the first number and the number of bits of information.

In a feasible implementation, in response to the value of the first number being greater than or equal to 2, each of the pilots is determined from a preset pilot set based on a second number of bits of information in the information packet. Here, the preset pilot set includes a third number of pilots, and the second number has a logarithmic function relationship with the third number, with a logarithm base of 2.

In this embodiment, the second communication node receives the pilots sent by the first communication node in a non-connected state, which are autonomously selected by the first communication node. i.e., the first communication node determines the pilots from the preset pilot set. The preset pilot set includes a third number of pilots, and the second number has a logarithmic function relationship with the third number, with a logarithm base of 2. For example, assuming the third number is D, then the second number is $\log_2(D)$, i.e., each pilot is determined from the preset pilot set based on $\log_2(D)$ bits of information in the information packet, without specific restrictions here. It is understood that the third number may be 64, 128, or more, without specific restrictions here.

In a feasible implementation, the information transmission method further includes the following step:
during the process of receiving the modulation symbols sent by the first communication node in a non-connected state, no pilots are received.

It is understood that during the process of receiving the modulation symbols sent by the first communication node in a non-connected state, the second communication node does not receive any pilots. That is, the second communication node only receives the modulation symbols. The second communication node can perform channel estimation using the modulation symbols, which can save the overhead required for pilots and ensure efficient information transmission between the first communication node and the second communication node in a non-connected state. This enables a large number of first communication nodes to achieve high spectral efficiency information transmission.

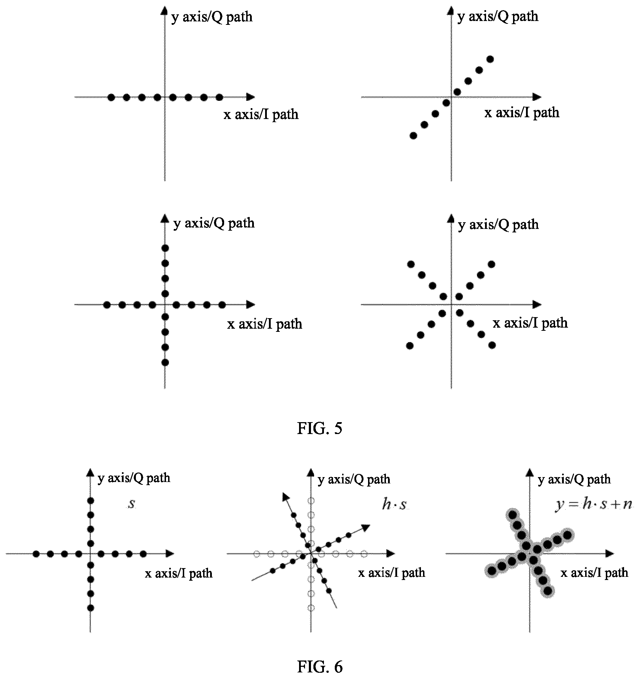

Referring to FIG. 5, which is a schematic view of a first constellation model and a second constellation model provided by an embodiment of the present disclosure. In an embodiment, the second constellation model may be a cross-shaped constellation diagram corresponding to the coordinate system in the lower left corner of FIG. 5 or a cross-shaped constellation diagram corresponding to the coordinate system in the lower right corner of FIG. 5. Here, in the cross-shaped constellation diagram, half of the constellation points lie on a line passing through the zero point (i.e., the origin), and the other half lie on another line passing through the zero point and perpendicular to the first line. Cross-shaped constellation diagrams have advantages such as high spectral efficiency and simple geometric shapes. Specifically, the cross-shaped constellation diagrams shown in FIG. 5 are constellation diagrams in a two-dimensional signal plane, each including 16 constellation points. Each constellation point corresponds to a modulation symbol, and each modulation symbol can carry 4 bits of information, that is, 4 bits of information are mapped (i.e., modulated) to one modulation symbol. Here, the constellation points in the cross-shaped constellation diagram in the lower left corner of FIG. 5 are distributed along the $x$ axis and $y$ axis (i.e., I path and Q path); and the constellation points in the cross-shaped constellation diagram in the lower right corner of FIG. 5 are distributed along lines at 45° and 135° directions passing through the origin. The cross-shaped constellation diagram in the lower right corner of FIG. 5 may be formed by rotating the cross-shaped constellation diagram in the lower left corner by 45°. It is understood that the second constellation model may also be other cross-shaped constellation diagrams besides those shown in the lower left and lower right corners of FIG. 5. The embodiments of the present disclosure do not specifically limit the form of the second constellation model.

As shown in FIG. 5, in an embodiment, the first constellation model may be a pulse amplitude modulation (PAM) constellation diagram corresponding to the coordinate system in the upper left corner of FIG. 5, or a PAM constellation diagram corresponding to the coordinate system in the upper right corner, i.e., a linear constellation diagram. Here, in the PAM constellation diagram, all constellation points lie on a line passing through the zero point (i.e., the origin). It is understood that the first constellation model may also be other PAM constellation diagrams besides those shown in the upper left and upper right corners of FIG. 5. The embodiments of the present disclosure do not specifically limit the form of the first constellation model.

In detail, each modulation symbol (i.e., each constellation point) may carry multiple bits of information, thereby achieving the effect of high-order modulation and high spectral efficiency. In an embodiment, each modulation symbol may carry 4 bits of information, that is, 4 bits of information are mapped (i.e., modulated) to one modulation symbol. In another embodiment, each modulation symbol may carry 5 bits of information, that is, 5 bits of information are mapped (i.e., modulated) to one modulation symbol.

It is understood that linear constellation diagrams (i.e., PAM constellation diagrams), cross-shaped constellation diagrams, and 8-arm constellation diagrams, which correspond to modulation symbols, all possess the advantage of simple geometric shapes. Even if the modulation symbols received by the receiving side (i.e., the second communication node) have undergone channel rotation and scaling, the constellation diagram corresponding to the modulation symbols is merely a rotated and scaled version of the original linear, cross-shaped, or 8-arm constellation diagram, and the resulting geometric shape remains relatively simple.

Since linear constellation diagrams are relatively simple, they are typically easier to process than cross-shaped constellation diagrams. Therefore, the slightly more complex cross-shaped constellation diagram will be used as an example for illustration below.

Referring to FIG. 6, which is a schematic view of a cross-shaped constellation diagram before and after channel rotation and scaling. The coordinate system on the left side of FIG. 6 represents the cross-shaped constellation diagram corresponding to the transmitted modulation symbols $s$ (i.e., modulation symbols $s$ at the first communication node without undergoing channel rotation and scaling). The coordinate system in the middle of FIG. 6 represents the cross-shaped constellation diagram corresponding to the modulation symbols $h * s$ received by the second communication node after undergoing rotation and scaling (i.e., $h$ multiplied by $s$, which may also be expressed as $h \cdot s$ or $hs$). Here, the complex number $h$ represents the rotation and scaling factor.

Notably, the coordinate system in the middle of FIG. 6 depicts the cross-shaped constellation diagram corresponding to the received modulation symbols without AWGN, which are the modulation symbols received by the second communication node after undergoing rotation and scaling. The coordinate system on the right side of FIG. 6 depicts the cross-shaped constellation diagram corresponding to the received modulation symbols ($y = h * s + n$) with AWGN. It is understood that the constellation diagram shown on the right side of FIG. 6 may be formed by adding complex numbers corresponding to AWGN to the constellation points in the constellation diagram shown in the middle of FIG. 6. In other words, the constellation points corresponding to the received modulation symbols ($h * s + n$) with AWGN will be distributed around the constellation points ($h * s$) in the constellation diagram shown in the middle of FIG. 6 according to the probability density of AWGN. In the constellation diagram on the right side of FIG. 6, the color of the constellation points changes from dark to light from the center to the edge. The constellation points represent a set of points formed by the corresponding modulation symbols affected by AWGN. As can be seen from the constellation diagram on the right side of FIG. 6, even in the presence of AWGN, the overall shape of the cross-shaped constellation diagram corresponding to the received modulation symbols remains cross-shaped. Therefore, the receiving side (i.e., the second communication node) may estimate the rotation and scaling factor experienced by the constellation diagram using the geometric shape of the cross-shaped constellation diagram shown on the right side of FIG. 6, which means that $h$ will be estimated.

Below is a detailed description of a method for estimating the rotation and scaling factor.

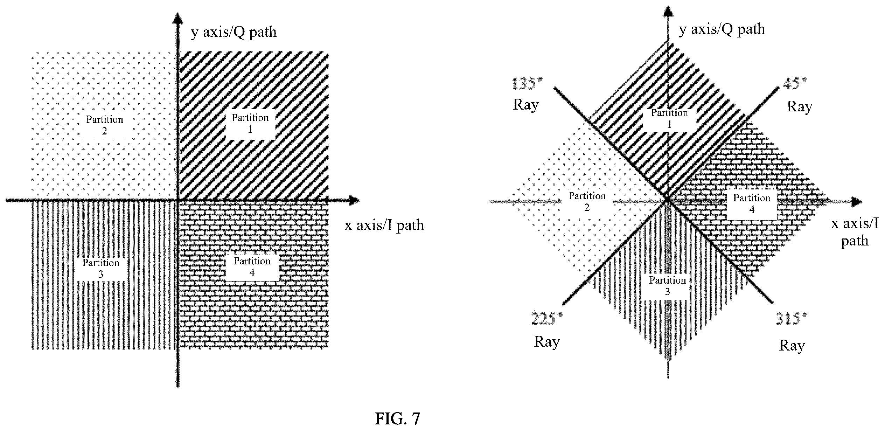

As shown in FIG. 7, first, the two-dimensional plane (i.e., the two-dimensional signal plane) is divided into four partitions. Two typical methods may be used for partitioning. Specifically, as shown in the left coordinate system in FIG. 7, in the first partitioning method, the four quadrants are used as four partitions, with the $x$ axis and the $y$ axis serving as partition lines. Here, the area filled with diagonal lines is partition 1, the area filled with fine dots is partition 2, the area filled with vertical lines is partition 3, and the area filled with bricks is partition 4. As shown in the right coordinate system in FIG. 7, the four partitions in the second partitioning method are formed by rotating the four partitions in the first partitioning method by 45°. That is, the area enclosed by the 45° ray emanating from the origin to the 135° ray emanating from the origin is partition 1, and the partition 1 is filled with diagonal lines; the area from the 135° ray emanating from the origin to the 225° ray emanating from the origin is partition 2, and the partition 2 is filled with fine dots; the area from the 225° ray emanating from the origin to the 315° ray emanating from the origin is partition 3, and the partition 3 is filled with vertical lines; the area from the 315° ray emanating from the origin to the 45° ray emanating from the origin is partition 4, and the partition 4 is filled with bricks. By adopting the two partitioning methods shown in FIG. 7 to determine the partition of a constellation point, it is only necessary to perform some simple addition and subtraction operations on the coordinates of the constellation point to determine its specific partition, without the need for complex multiplication operations. It can be seen that the method is simple and convenient. In addition to the above two partitioning methods, other partitioning methods may also be selected to divide the two-dimensional plane into four partitions. The embodiments of the present disclosure do not impose specific restrictions here.

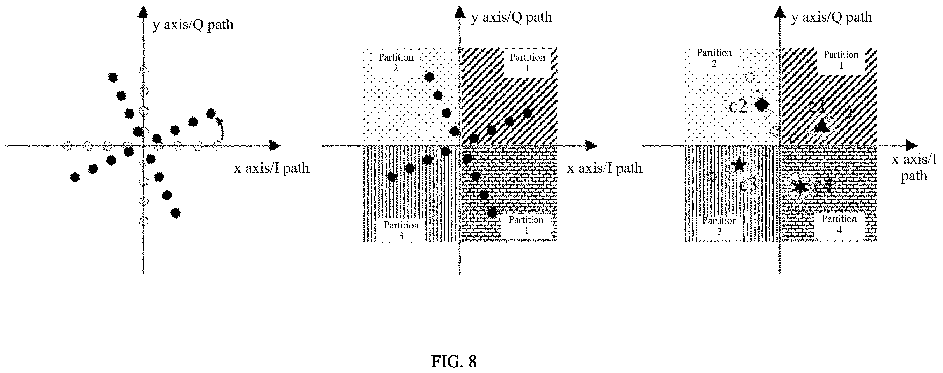

As shown in FIGS. 6 to 8, after dividing the two-dimensional signal plane into four partitions at the receiving side (i.e., the second communication node), the constellation points (i.e., the modulation symbols corresponding to each constellation point) within each partition are summed and then divided by the number of constellation points in the partition (i.e., the number of modulation symbols). This allows for the calculation of a coordinate point, which represents the center of the constellation points in the partition. The cross-shaped constellation diagram shown in the middle of FIG. 6 is a rotated and scaled version of the cross-shaped constellation diagram shown on the left side of FIG. 6. Taking the partitioning shown in the left coordinate system of FIG. 7 as an example, after partitioning, all constellation points are divided into four parts, as shown in the middle and right coordinate systems of FIG. 8. By summing the constellation points in partition 1 and dividing by the number of constellation points in the partition, the center $c1$ of the constellation points in partition 1 can be obtained, which is located at the position of the triangle shown in the right coordinate system of FIG. 8. Similarly, by summing the constellation points in partition 2 and dividing by the number of constellation points in the partition, the center $c2$ of the constellation points in partition 2 can be obtained, which is located at the position of the quadrangle shown in the right coordinate system of FIG. 8. By summing the constellation points in partition 3 and dividing by the number of constellation points in the partition, the center $c3$ of the constellation points in partition 3 can be obtained, which is located at the position of the pentagram shown in the right coordinate system of FIG. 8. By summing the constellation points in partition 4 and dividing by the number of constellation points in the partition, the center c4 of the constellation points in partition 4 can be obtained, which is located at the position of the hexagram shown in the right coordinate system of FIG. 8.

As shown in FIGS. 7 and 8, the rotation and scaling factor of the entire constellation diagram can be derived based on the centers of the constellation points in all partitions. Specifically, taking a partitioning method depicted in FIG. 8 as an example, assume that the calculated centers of the constellation points for the four partitions are $c1$, $c2$, $c3$ and $c4$, respectively, by rotating the center $c2$ of the constellation points in partition 2 clockwise by 90°, c2' is obtained, that is, c2' = c2 * (-j); by rotating the center $c3$ of the constellation points in partition 3 clockwise by 180°, c3' is obtained, that is, c3' = -c3; by rotating the center c4 of the constellation points in partition 4 anticlockwise by 90°, c4' is obtained, that is, c4' = c4 * j; then, based on c1, c2', c3', c4', the rotation and scaling factor c experienced by the entire constellation diagram may be estimated. The rotation and scaling factor c may be expressed by the following formula:

$$c = (c1 + c2' + c3' + c4')/4$$

In the presence of AWGN, especially when some modulation symbols are subjected to larger AWGN, handovers may occur for some modulation symbols. To estimate the rotation and scaling factor more accurately, it is usually necessary to use the two partitioning methods shown in FIG. 7. For the two partitioning methods, two rotation and scaling factors of the constellation diagram are calculated according to the above estimation method, and then the larger magnitude of the two rotation and scaling factors is taken as the rotation and scaling factor of the constellation diagram.

As shown in FIG. 5, for the linear constellation diagram in the upper left or upper right corner of FIG. 5, the rotation and scaling factor of the constellation diagram may be calculated by using 2 partitions only. For example, the receiving side (i.e., the second communication node) divides the two-dimensional signal plane into 2 partitions along the $y$ axis, sums the constellation points (i.e., the modulation symbols corresponding to each constellation point) within each partition, and then divides by the number of constellation points in the partition (i.e., the number of modulation symbols). This results in a constellation point, which is the center of the constellation points for the partition. The rotation and scaling factor of the entire constellation diagram may then be obtained through the centers of the constellation points in all partitions. Assuming the right side of the $x$ axis (i.e., $x \geq 0$) is partition 1, the center of the constellation points in the partition 1 is c1, the left side of the $x$ axis (i.e., $x<0$) is partition 2, and the center of the constellation points in the partition 2 is c2, by rotating the center c2 of the constellation points in partition 2 clockwise by 90°, c2' is obtained, that is, $c2' = -c2$; then, based on c1, $c2'$, the rotation and scaling factor c experienced by the entire constellation diagram may be estimated. The rotation and scaling amount c may be expressed by the following formula:

$$c = (c1 + c2')/2$$

To estimate the rotation and scaling factor more accurately, four different two-partition methods may be used for partitioning. In the first partitioning method, the two-dimensional signal plane is divided into two partitions by using the $x$ axis as a partition line. In the second method, the two-dimensional signal plane is divided into two partitions by using the $y$ axis as a partition line. In the third partitioning method, the two-dimensional signal plane is divided into two partitions by a 45° line passing through the origin. In the fourth partitioning method, the two-dimensional signal plane is divided into two partitions by a 135° line passing through the origin.

Based on the four different two-partition methods, four rotation and scaling factors are calculated, and the one with the largest magnitude is taken as the rotation and scaling factor of the constellation diagram. After the receiving side (i.e., the second communication node) estimates the rotation and scaling factor experienced by the constellation diagram, the rotation and scaling factor may be equalized to obtain a constellation diagram without distortion and only affected by AWGN.

Therefore, a plurality of modulation symbols obtained through the first constellation model, the second constellation model, or the third constellation model may form a constellation diagram with a simple geometric shape. Even when the modulation symbols undergo rotation and scaling distortion due to channel interference, the resulting constellation diagram still presents a simple geometric shape. Therefore, the information transmission method of the present disclosure can achieve compensation solely based on the shape characteristics of the constellation diagram, thereby improving demodulation performance and ensuring high frequency spectrum efficiency without the need to increase pilot overhead.

It is understood that the rotation and scaling factor of modulation symbols include a rotation component and a scaling component.

The information transmission method provided in the aforementioned embodiments will be described in detail below through specific examples.

Example I:

Referring to FIG. 6, the cross-shaped constellation diagram in FIG. 6 may be divided into two parts, with constellation points in each part lying on a line passing through the zero point (i.e., the origin). For instance, in the cross-shaped constellation diagram corresponding to the left coordinate system in FIG. 6, half of the constellation points fall on the line along the $x$ axis, while the other half fall on the line along the $y$ axis. In the cross-shaped constellation diagram corresponding to the middle coordinate system in FIG. 6, half of the constellation points fall on a line passing through the zero point (i.e., the origin) and forming a 45° angle with the positive half of the $x$ axis, while the other half fall on a line passing through the zero point (i.e., the origin) and forming a 135° angle with the positive half of the x axis.

Specifically, if the distances between adjacent constellation points on a line passing through the origin are equal, and this distance is denoted as $2d$, then among the four constellation points closest to the origin, the distance between adjacent points is only $\sqrt{2}d$. That is, among the four constellation points closest to the origin, the distance between adjacent constellation points is smaller than that of adjacent constellation points along the same line. In other words, the four constellation points closest to the origin are more densely distributed. Therefore, the constellation diagram is more susceptible to AWGN interference, leading to degraded demodulation performance.

Additionally, the cross-shaped constellation diagram may be divided into four parts. For example, the constellation points in the cross-shaped constellation diagram corresponding to the left coordinate system in FIG. 6 may be divided into four parts according to the partitioning method shown in the right coordinate system of FIG. 7. Here, the constellation points in the first part are those greater than 0 on the $x$ axis, which are located on the positive half of the $x$ axis, and the first part corresponds to partition 4 in the right coordinate system of FIG. 7. The constellation points in the second part are those smaller than 0 on the $x$ axis, which are located on the negative half of the $x$ axis, and the second part corresponds to partition 2 in the right coordinate system of FIG. 7. The constellation points in the third part are those greater than 0 on the $y$ axis, which are located on the positive half of the $y$ axis, and the third part corresponds to partition 1 in the right coordinate system of FIG. 7. The constellation points in the fourth part are those smaller than 0 on the $y$ axis, which are located on the negative half of the $y$ axis, and the fourth part corresponds to partition 3 in the right coordinate system of FIG. 7.

Further, to avoid the aforementioned issue (where, among the four constellation points nearest to the origin, the distance between adjacent constellation points is smaller than that of adjacent constellation points along the same line), a positive offset $\Delta$ may be added to the constellation points in each of the four parts of the cross-shaped constellation diagram. This ensures that, among the four constellation points nearest to the origin, the distance between adjacent points is greater than that between adjacent points on the same straight line. In other words, all constellation points in the four parts are shifted away from the origin to prevent the four constellation points nearest to the origin from being densely distributed, thereby improving demodulation performance.

Alternatively, the constellation points in the four parts of the cross-shaped constellation diagram may be defined without adding a positive offset $\Delta$, that is, the offset of constellation points for each part of the cross-shaped constellation diagram is 0. In this cross-shaped constellation diagram, where the offset of constellation points for all parts is 0, the distances between adjacent constellation points on the same line are equal. As a result, the average power of the constellation diagram is lower. Specifically, in case that $a_n = (2n - 1 + \Delta)d$, the value of $\Delta$ may be $\sqrt{2} - 1$, and at this point,

$$a_n = \left(2n - 1 + \sqrt{2} - 1\right)d = \left(2n - 2 + \sqrt{2}\right)d$$

. Among the four constellation points closest to the origin, the distance between adjacent constellation points is $2d$. Additionally, the distance between adjacent constellation points on the same line is also $2d$. This means that, among the four constellation points nearest to the origin, the distance between adjacent constellation points is equal to the distance between adjacent constellation points on the same line in each part.

It is understood that, in order to enhance the transmission performance of the four constellation points nearest to the origin in the cross-shaped constellation diagram, the distance between adjacent constellation points among the four points nearest to the origin may be increased. As a result, the expansion of the cross-shaped constellation diagram prevents the four constellation points nearest to the origin from being overly concentrated, thereby reducing the impact of AWGN on the constellation points (i.e., modulation symbols) and enhancing the robustness of the cross-shaped constellation diagram. For example, let $a_n = nd$ and $d$ be a positive real number, such that the distance between adjacent constellation points among the four constellation points nearest to the origin is $\sqrt{2}d$, while the distance between adjacent constellation points on the same line within each part is $d$. In other words, the distance between adjacent constellation points among the four constellation points nearest to the origin is greater than that between adjacent points on the same line within each part. This means that the constellation points in all four parts are shifted away from the origin, reducing the impact of AWGN on the constellation points (i.e., modulation symbols) and thus improving the demodulation performance of the second communication node. However, adding a positive offset $\Delta$ to the constellation points in each of the four parts of the cross-shaped constellation diagram will increase the average power of the constellation diagram. Therefore, in some scenarios, a cross-shaped constellation diagram with an offset $\Delta$ of 0 may also be adopted. No specific restrictions are imposed here.

Example II:

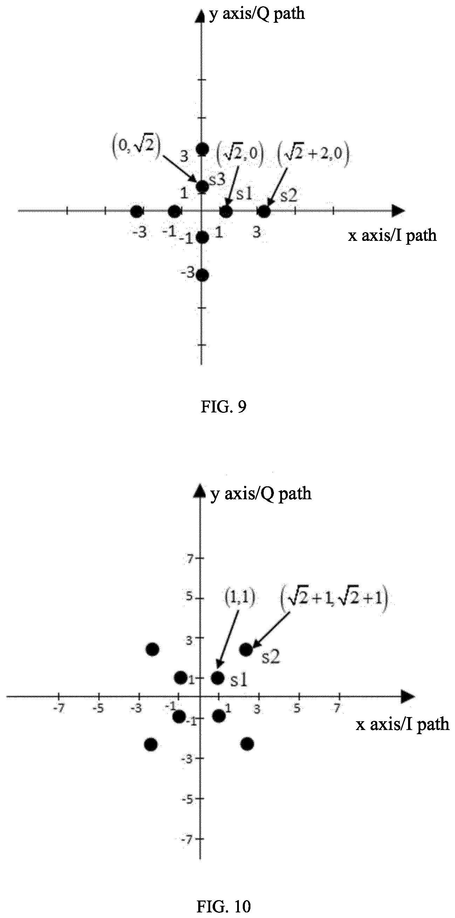

For example, the value of $\Delta$ meets the formula $\Delta = \sqrt{2} - 1$. Referring to FIG. 9, when the second constellation model is a cross-shaped constellation diagram and the value of $M2$ is 1, three bits of information in the information packet can be modulated by means of the second constellation model, resulting in one modulation symbol. Based on $N2 = 2^{M2}$, $N2 = 2$ is derived. Therefore, the second constellation model is a cross-shaped constellation diagram including 8 constellation points. Here, the value of $d$ is 1, that is, the scaling component of the cross-shaped constellation diagram is 1; and the value of $\theta$ is 0, that is, the rotation component of the cross-shaped constellation diagram is 0, which means that the constellation points in the cross-shaped constellation diagram are distributed along the $x$ axis and $y$ axis (i.e., I path and Q path). Then, based on $a_n = 2n - 2 + \sqrt{2}$, $a_1 = 2 + \sqrt{2} - 2 = \sqrt{2}$ and $a_2 = 2 * 2 + \sqrt{2} - 2 = 2 + \sqrt{2}$ are derived. Therefore, the distance between the constellation point $a_1 e^{j0}$ (i.e., $s1$) and the constellation point $b_1 e^{j(0+\pi/2)}$ (i.e., $s3$) is 2, that is,

$$\left| \sqrt{2}e^{j0} - \sqrt{2}e^{j(0+\pi/2)} \right| = 2$$

, where $e^{j0} = \cos 0 + j \sin 0 = 1$, and $e^{j(0+\pi/2)} = \cos(0 + \pi/2) + j \sin(0 + \pi/2) = j$. Thus, it is determined that the distance between adjacent constellation points on the same line is 2. Similarly, the distance between the constellation point $a_1 e^{j0}$ (i.e., $s1$) and the constellation point $a_2 e^{j0}$ (i.e., $s2$) is 2, that is, $\left| \sqrt{2}e^{j0} - (2 + \sqrt{2})e^{j0} \right| = 2$, and the distance between adjacent constellation points among the four constellation points nearest to the origin is 2. Therefore, the distance between the constellation point $s1$ and the constellation point $s3$ is equal to the distance between the constellation point $s1$ and the constellation point $s2$. Thus, the distance between adjacent constellation points among the four constellation points nearest to the origin is equal to the distance between adjacent constellation points on the same line. Here, the coordinates of the constellation point $s1$ are $(\sqrt{2}, 0)$, the coordinates of the constellation point $s2$ are $(\sqrt{2} + 2, 0)$, and the coordinates of the constellation point s3 are $(0, \sqrt{2})$. It is understood that the two-dimensional coordinates of other constellation points may be calculated using the complex forms corresponding to the constellation points in the second constellation model, which will not be elaborated further here.

Thus, in the case where the value of $\Delta$ is $\sqrt{2} - 1$, the two-dimensional coordinates of the 8 constellation points shown in FIG. 9 are as follows:

$$\left(\sqrt{2}, 0\right), \left(\sqrt{2} + 2, 0\right),$$

$$(0,\sqrt{2}),(0,\sqrt{2}+2),$$

$$(-\sqrt{2},0),(-\sqrt{2}-2,0),$$

$$(0,-\sqrt{2}),(0,-\sqrt{2}-2)$$

Additionally, the two-dimensional coordinates of the 8 constellation points may include:

$$(1+\Delta,0),(3+\Delta,0),$$

$$(0,1+\Delta),(0,3+\Delta),$$

$$(-(1+\Delta),0),(-(3+\Delta),0),$$

$$(0,-(1+\Delta)),(0,-(3+\Delta))$$

where $\Delta$ may be represented as finite decimals, for example, $\Delta = \sqrt{2} - 1 = 1.141 - 1 = 0.141$ , with no specific restrictions here.

When it is necessary to perform power normalization on the second constellation model, the two-dimensional coordinates of the 8 constellation points corresponding to the second constellation model may be uniformly multiplied by a normalization factor.

Example III:

For example, the value of $\Delta$ meets the formula $\Delta = \sqrt{2} - 1$. Referring to FIG. 10, when the second constellation model is a cross-shaped constellation diagram and the value of $M2$ is 1, three bits of information in the information packet can be modulated by means of the second constellation model, resulting in one modulation symbol. Based on $N2 = 2^{M2}$, $N2 = 2$ is derived. Therefore, the second constellation model is a cross-shaped constellation diagram including 8 constellation points. Here, the value of $d$ is 1, that is, the scaling component of the cross-shaped constellation diagram is 1; and the value of $\theta$ is $\pi/4$, that is, the rotation component of the cross-shaped constellation diagram is $\pi/4$, which means that half of the constellation points in the cross-shaped constellation diagram fall on a line passing through the zero point (i.e., the origin) and forming a 45° angle with the positive half of the $x$ axis, while the other half fall on a line passing through the zero point (i.e., the origin) and forming a 135° angle with the positive half of the $x$ axis. Then, based on $a_n = 2n - 2 + \sqrt{2}$, $a_1 = 2 + \sqrt{2} - 2 = \sqrt{2}$ and $a_2 = 2*2 + \sqrt{2} - 2 = 2 + \sqrt{2}$ are derived, and $a_1 e^{j\pi/4} = \sqrt{2}e^{j\pi/4} = 1 + j$ and $a_2 e^{j\pi/4} = (2 + \sqrt{2})e^{j\pi/4} = (\sqrt{2} + 1) + j(\sqrt{2} + 1)$ are further derived. Thus, the coordinates of the constellation point s1 corresponding to $a_1 e^{j\pi/4}$ are (1,1), and the coordinates of the constellation point $s2$ corresponding to $a_2 e^{j\pi/4}$ are $(\sqrt{2} + 1, \sqrt{2} + 1)$. It is understood that the two-dimensional coordinates of other constellation points may be calculated using the complex forms corresponding to the constellation points in the second constellation model, which will not be elaborated further here.

Thus, in the case where the value of $\Delta$ is $\sqrt{2} - 1$, the two-dimensional coordinates of the 8 constellation points shown in FIG. 10 are as follows:

$$(1,1),(\sqrt{2}+1,\sqrt{2}+1),$$

$$(-1,1),(-\sqrt{2}-1,\sqrt{2}+1),$$

$$(-1,-1),(-\sqrt{2}-1,-\sqrt{2}-1),$$

$$(1, -1), (\sqrt{2} + 1, -\sqrt{2} - 1)$$

It is understood that the value of $\Delta$ may also satisfy the formula $\Delta = 1 - \frac{\sqrt{2}}{2}$. Here, $\Delta$ may be represented as finite decimals, for example, $\Delta = 1 - 0.707 = 0.293$, with no specific restrictions here.

In the case where the value of $\Delta$ meets the formula $\Delta = 1 - \frac{\sqrt{2}}{2}$, the two-dimensional coordinates of the 8 constellation points may include:

$$\left(\left(\frac{\sqrt{2}}{2} + \Delta\right), \left(\frac{\sqrt{2}}{2} + \Delta\right)\right), \left(\left(\frac{3\sqrt{2}}{2} + \Delta\right), \left(\frac{3\sqrt{2}}{2} + \Delta\right)\right),$$

$$\left(-\left(\frac{\sqrt{2}}{2} + \Delta\right), -\left(\frac{\sqrt{2}}{2} + \Delta\right)\right), \left(-\left(\frac{3\sqrt{2}}{2} + \Delta\right), -\left(\frac{3\sqrt{2}}{2} + \Delta\right)\right),$$

$$\left(\left(\frac{\sqrt{2}}{2} + \Delta\right), -\left(\frac{\sqrt{2}}{2} + \Delta\right)\right), \left(\left(\frac{3\sqrt{2}}{2} + \Delta\right), -\left(\frac{3\sqrt{2}}{2} + \Delta\right)\right),$$

$$\left(-\left(\frac{\sqrt{2}}{2} + \Delta\right), \left(\frac{\sqrt{2}}{2} + \Delta\right)\right), \left(-\left(\frac{3\sqrt{2}}{2} + \Delta\right), \left(\frac{3\sqrt{2}}{2} + \Delta\right)\right)$$

When it is necessary to perform power normalization on the second constellation model, the two-dimensional coordinates of the 8 constellation points corresponding to the second constellation model may be uniformly multiplied by a normalization factor.

Example IV:

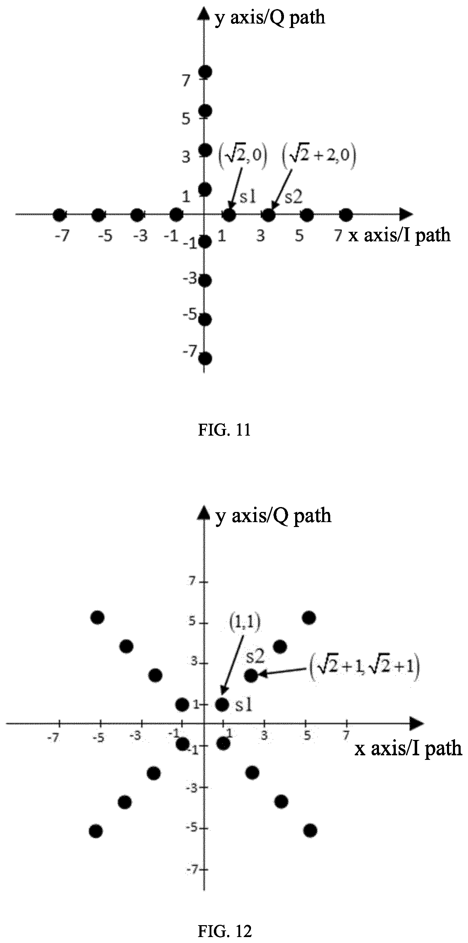

Referring to FIG. 11, when the second constellation model is a cross-shaped constellation diagram and the value of $M2$ is 2, 4 bits of information in the information packet can be modulated by means of the second constellation model, resulting in one modulation symbol. Based on $N2 = 2^{M2}$, $N2 = 4$ is derived. Therefore, the second constellation model is a cross-shaped constellation diagram including 16 constellation points. Here, the value of $d$ is 1, that is, the scaling component of the cross-shaped constellation diagram is 1; and the value of $\theta$ is 0, that is, the rotation component of the cross-shaped constellation diagram is 0, which means that the constellation points in the cross-shaped constellation diagram are distributed along the $x$ axis and $y$ axis (i.e., I path and Q path). Then, based on $a_n = 2n - 2 + \sqrt{2}$, $a_1 = 2 - 2 + \sqrt{2} = \sqrt{2}$ and $a_2 = 4 - 2 + \sqrt{2} = 2 + \sqrt{2}$ are derived.

Based on $e^{j0} = \cos 0 + j \sin 0 = 1$, $\left|\sqrt{2}e^{j0} - (2 + \sqrt{2})e^{j0}\right| = 2$ is derived. Thus, it is determined that the distance between $a_1 e^{j0}$ and $a_2 e^{j0}$ is 2, that is, the distance between adjacent constellation points on the same line is 2. Additionally, based on $b_n = a_n + \beta$, in response to the value of $\beta$ being 0, $b_n = a_n$ is derived. That is, $b_n$ and $a_n$ are equal.

Based on $e^{j(0+\pi/2)} = \cos(0 + \pi/2) + j \sin(0 + \pi/2) = j$, $\left|\sqrt{2}e^{j0} - (2 + \sqrt{2})e^{j(0+\pi/2)}\right| = 2$ is derived. Thus, it is determined that the distance between $a_1 e^{j0}$ and $b_1 e^{j(0+\pi/2)}$ is 2, that is, the distance between adjacent constellation points among the four constellation points nearest to the origin is 2. Thus, the distance between adjacent constellation points among the four constellation points nearest to the origin is equal to the distance between adjacent constellation points on the same line. With reference to the calculation method in Example III above, it can be determined that the coordinates of the constellation point $s1$ are $(\sqrt{2}, 0)$, and the coordinates of the constellation point $s2$ are $(\sqrt{2} + 2, 0)$. The two-dimensional coordinates of other constellation points may be calculated using the complex forms corresponding to the constellation points in the second constellation model, which will not be elaborated further here.

Thus, in the case where the value of $\Delta$ is $\sqrt{2}-1$, the two-dimensional coordinates of the 16 constellation points shown in FIG. 11 are as follows:

$$\left(\sqrt{2},0\right),\left(2+\sqrt{2},0\right),\left(4+\sqrt{2},0\right),\left(6+\sqrt{2},0\right),$$

$$\left(-\sqrt{2},0\right),\left(-2-\sqrt{2},0\right),\left(-4-\sqrt{2},0\right),\left(-6-\sqrt{2},0\right),$$

$$\left(0,\sqrt{2}\right),\left(0,2+\sqrt{2}\right),\left(0,4+\sqrt{2}\right),\left(0,6+\sqrt{2}\right),$$

$$\left(0,-\sqrt{2}\right),\left(0,-2-\sqrt{2}\right),\left(0,-4-\sqrt{2}\right),\left(0,-6-\sqrt{2}\right)$$

Additionally, the two-dimensional coordinates of the 16 constellation points may include:

$$(1+\Delta,0),(3+\Delta,0),(5+\Delta,0),(7+\Delta,0),$$

$$(-(1+\Delta),0),(-(3+\Delta),0),(-(5+\Delta),0),(-(7+\Delta),0),$$

$$(0,1+\Delta),(0,3+\Delta),(0,5+\Delta),(0,7+\Delta),$$

$$\left(0,-(1+\Delta)\right),\left(0,-(3+\Delta)\right),\left(0,-(5+\Delta)\right),\left(0,-(7+\Delta)\right)$$

where $\Delta$ may be represented as finite decimals, for example, $\Delta=\sqrt{2}-1=1.141-1=0.141$, with no specific restrictions here.

When it is necessary to perform power normalization on the second constellation model, the two-dimensional coordinates of the 16 constellation points corresponding to the second constellation model may be uniformly multiplied by a normalization factor.

Example V:

Referring to FIG. 12, when the second constellation model is a cross-shaped constellation diagram and the value of $M2$ is 2, 4 bits of information in the information packet can be modulated by means of the second constellation model, resulting in one modulation symbol. Based on $N2 = 2^{M2}$, $N2 = 4$ is derived. Therefore, the second constellation model is a cross-shaped constellation diagram including 16 constellation points. Here, the value of $d$ is 1, that is, the scaling component of the cross-shaped constellation diagram is 1; and the value of $\theta$ is $\pi/4$, that is, the rotation component of the cross-shaped constellation diagram is $\pi/4$, which means that half of the constellation points in the cross-shaped constellation diagram fall on a line passing through the zero point (i.e., the origin) and forming a 45° angle with the positive half of the $x$ axis, while the other half fall on a line passing through the zero point (i.e., the origin) and forming a 135° angle with the positive half of the $x$ axis. Then, based on $a_n = (2n - 1 + \Delta)d$, $a_n = 2n - 1 + \Delta$ is derived. If $\Delta = \sqrt{2}-1$, then $a_n = 2n - 2 + \sqrt{2}$. Therefore, $a_1 = 2 + \sqrt{2} - 2 = \sqrt{2}$, $a_2 = 2*2 + \sqrt{2} - 2 = 2 + \sqrt{2}$, $a_3 = 6 - 2 + \sqrt{2} = 4 + \sqrt{2}$, $a_4 = 8 - 2 + \sqrt{2} = 6 + \sqrt{2}$, and further $a_1 e^{j\pi/4} = \sqrt{2}e^{j\pi/4} = 1 + j$, and $a_2 e^{j\pi/4} = (2+\sqrt{2})e^{j\pi/4} = (\sqrt{2}+1) + j(\sqrt{2}+1)$. Thus, the coordinates of the constellation point s1 corresponding to $a_1 e^{j\pi/4}$ are (1,1), and the coordinates of the constellation point s2 corresponding to $a_2 e^{j\pi/4}$ are $(\sqrt{2}+1, \sqrt{2}+1)$. It is understood that the two-dimensional coordinates of other constellation points may be calculated using the complex forms corresponding to the constellation points in the second constellation model, which will not be elaborated further here.

Thus, in the case where the value of $\Delta$ is $\sqrt{2}-1$, the two-dimensional coordinates of the 16 constellation points shown in FIG. 12 are as follows:

$$(1,1), (\sqrt{2}+1, \sqrt{2}+1), (2\sqrt{2}+1, 2\sqrt{2}+1), (3\sqrt{2}+1, 3\sqrt{2}+1),$$

$$(-1,1), (-\sqrt{2}-1, \sqrt{2}+1), (-2\sqrt{2}-1, 2\sqrt{2}+1), (-2\sqrt{2}-1, 2\sqrt{2}+1),$$

$$(-1,-1), (-\sqrt{2}-1, -\sqrt{2}-1), (-2\sqrt{2}-1, -2\sqrt{2}-1), (-2\sqrt{2}-1, -2\sqrt{2}-1),$$

$$(1,-1), (\sqrt{2}+1, -\sqrt{2}-1), (2\sqrt{2}+1, -2\sqrt{2}-1), (2\sqrt{2}+1, -2\sqrt{2}-1)$$

It is understood that the value of $\Delta$ may also satisfy the formula $\Delta = 1 - \frac{\sqrt{2}}{2}$. Here, $\Delta$ may be represented as finite decimals, for example, $\Delta = 1 - 0.707 = 0.293$, with no specific restrictions here.

In the case where $\Delta$ meets the formula $\Delta = 1 - \frac{\sqrt{2}}{2}$, the two-dimensional coordinates of the 16 constellation points may include:

$$\left(\left(\frac{\sqrt{2}}{2}+\Delta\right), \left(\frac{\sqrt{2}}{2}+\Delta\right)\right), \left(\left(\frac{3\sqrt{2}}{2}+\Delta\right), \left(\frac{3\sqrt{2}}{2}+\Delta\right)\right),$$

$$\left(\left(\frac{5\sqrt{2}}{2}+\Delta\right), \left(\frac{5\sqrt{2}}{2}+\Delta\right)\right), \left(\left(\frac{7\sqrt{2}}{2}+\Delta\right), \left(\frac{7\sqrt{2}}{2}+\Delta\right)\right),$$

$$\left(-\left(\frac{\sqrt{2}}{2}+\Delta\right), -\left(\frac{\sqrt{2}}{2}+\Delta\right)\right), \left(-\left(\frac{3\sqrt{2}}{2}+\Delta\right), -\left(\frac{3\sqrt{2}}{2}+\Delta\right)\right),$$

$$\left(-\left(\frac{5\sqrt{2}}{2}+\Delta\right), -\left(\frac{5\sqrt{2}}{2}+\Delta\right)\right), \left(-\left(\frac{7\sqrt{2}}{2}+\Delta\right), -\left(\frac{7\sqrt{2}}{2}+\Delta\right)\right),$$

$$\left(\left(\frac{\sqrt{2}}{2}+\Delta\right), -\left(\frac{\sqrt{2}}{2}+\Delta\right)\right), \left(\left(\frac{3\sqrt{2}}{2}+\Delta\right), -\left(\frac{3\sqrt{2}}{2}+\Delta\right)\right),$$

$$\left(\left(\frac{5\sqrt{2}}{2}+\Delta\right), -\left(\frac{5\sqrt{2}}{2}+\Delta\right)\right), \left(\left(\frac{7\sqrt{2}}{2}+\Delta\right), -\left(\frac{7\sqrt{2}}{2}+\Delta\right)\right),$$

$$\left(-\left(\frac{\sqrt{2}}{2}+\Delta\right), \left(\frac{\sqrt{2}}{2}+\Delta\right)\right), \left(-\left(\frac{3\sqrt{2}}{2}+\Delta\right), \left(\frac{3\sqrt{2}}{2}+\Delta\right)\right),$$

$$\left(-\left(\frac{5\sqrt{2}}{2}+\Delta\right),\left(\frac{5\sqrt{2}}{2}+\Delta\right)\right),\left(-\left(\frac{7\sqrt{2}}{2}+\Delta\right),\left(\frac{7\sqrt{2}}{2}+\Delta\right)\right)$$

Based on $\left|\sqrt{2}e^{j\pi/4}-\left(2+\sqrt{2}\right)e^{j\pi/4}\right|=2$, it is determined that the distance between $a_1e^{j\pi/4}$ and $a_2e^{j\pi/4}$ is 2, that is, the distance between adjacent constellation points on the same line is 2. Additionally, based on $e^{j(\pi/4+\pi/2)}=\cos(\pi/4+\pi/2)+j\sin(\pi/4+\pi/2)=-\frac{\sqrt{2}}{2}+\frac{\sqrt{2}}{2}j$, $\left|\sqrt{2}e^{j(\pi/4)}-\sqrt{2}e^{j(\pi/4+\pi/2)}\right|=2$ is derived. Thus, it is determined that the distance between $a_1e^{j\pi/4}$ and $a_1e^{j(\pi/4+\pi/2)}$ is 2, that is, the distance between adjacent constellation points among the four constellation points nearest to the origin is 2. Thus, the distance between adjacent constellation points among the four constellation points nearest to the origin is equal to the distance between adjacent constellation points on the same line.

When it is necessary to perform power normalization on the second constellation model, the two-dimensional coordinates of the 16 constellation points corresponding to the second constellation model may be uniformly multiplied by a normalization factor.

Example VI:

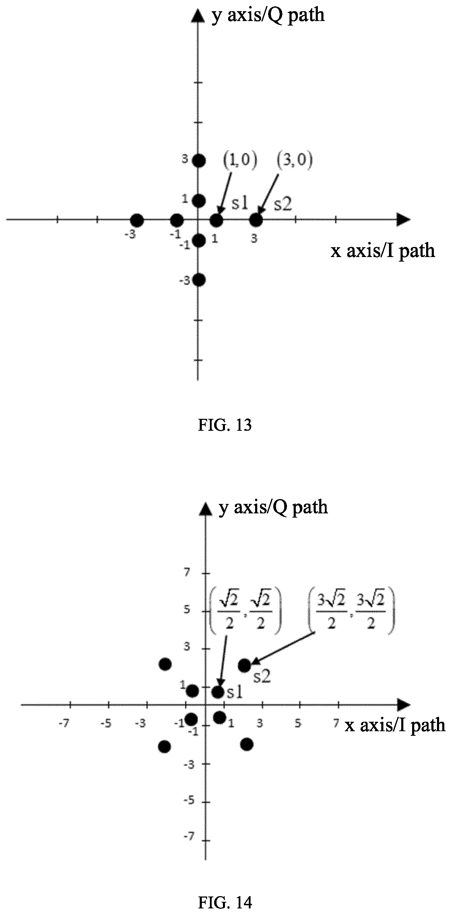

For example, the value of $\Delta$ meets the formula $\Delta = 0$. Referring to FIG. 13, when the second constellation model is a cross-shaped constellation diagram and the value of $M$ is 1, three bits of information in the information packet can be modulated by means of the second constellation model, resulting in one modulation symbol. Based on $N2 = 2^{M2}$, $N2 = 2$ is derived. Therefore, the second constellation model is a cross-shaped constellation diagram including 8 constellation points. Here, the value of $d$ is 1, that is, the scaling component of the cross-shaped constellation diagram is 1; and the value of $\theta$ is 0, that is, the rotation component of the cross-shaped constellation diagram is 0, which means that the constellation points in the cross-shaped constellation diagram are distributed along the $x$ axis and $y$ axis (i.e., I path and Q path). Then, based on $a_n = (2n - 1 + \Delta)d$, $a_n = 2n - 1$ is derived. Therefore, $a_1 = 1$ and $a_2 = 3$ are derived. Because $e^{j0} = \cos 0 + j\sin 0 = 1$, $a_1e^{j0} = 1$ and $a_2e^{j0} = 3$, the coordinates of the constellation point $s1$ corresponding to $a_1e^{j0}$ are (1,0), and the coordinates of the constellation point $s2$ corresponding to $a_2e^{j0}$ are (3,0). It is understood that the two-dimensional coordinates of other constellation points may be calculated using the complex forms corresponding to the constellation points in the second constellation model, which will not be elaborated further here.

Thus, in the case where the value of $\Delta$ is 0, the two-dimensional coordinates of the 8 constellation points shown in FIG. 13 are as follows:

$$(1,0),(3,0),$$

$$(0,1),(0,3),$$

$$(-1,0),(-3,0),$$

$$(0,-1),(0,-3)$$

When it is necessary to perform power normalization on the second constellation model, the two-dimensional coordinates of the 8 constellation points corresponding to the second constellation model may be uniformly multiplied by a normalization factor (such as 1/$sqrt$(10)).

Example VII:

For example, the value of $\Delta$ meets the formula $\Delta = 0$. Referring to FIG. 14, when the second constellation model is a cross-shaped constellation diagram and the value of $M2$ is 1, three bits of information in the information packet can be modulated by means of the second constellation model, resulting in one modulation symbol. Based on $N2 = 2^{M2}$, $N2 = 2$ is derived. Therefore, the second constellation model is a cross-shaped constellation diagram including 8 constellation points. Here, the value of $d$ is 1, that is, the scaling component of the cross-shaped constellation diagram is 1; and the value of $\theta$ is $\pi/4$, that is, the rotation component of the cross-shaped constellation diagram is $\pi/4$, which means that half of the constellation points in the cross-shaped constellation diagram fall on a line passing through the zero point (i.e., the origin) and forming a 45° angle with the positive half of the x axis, while the other half fall on a line passing through the zero point (i.e., the origin) and forming a 135° angle with the positive half of the x axis. Then, based on $a_n = (2n - 1 + \Delta)d$, $a_n = 2n - 1$ is derived. Therefore, $a_1 = 1$, $a_2 = 3$, and further

$$a_1 e^{j\pi/4} = e^{j\pi/4} = \frac{\sqrt{2}}{2} + \frac{\sqrt{2}}{2}j \quad \text{and} \quad a_2 e^{j\pi/4} = 3e^{j\pi/4} = \frac{3\sqrt{2}}{2} + \frac{3\sqrt{2}}{2}j$$

are derived. Thus, the coordinates of the constellation point s1 corresponding to $a_1 e^{j\pi/4}$ are $\left(\frac{\sqrt{2}}{2}, \frac{\sqrt{2}}{2}\right)$, and the coordinates of the constellation point s2 corresponding to $a_2 e^{j\pi/4}$ are $\left(\frac{3\sqrt{2}}{2}, \frac{3\sqrt{2}}{2}\right)$. It is understood that the two-dimensional coordinates of other constellation points may be calculated using the complex forms corresponding to the constellation points in the second constellation model, which will not be elaborated further here.

Thus, the two-dimensional coordinates of the 8 constellation points may include:

$$\left(\frac{\sqrt{2}}{2}, \frac{\sqrt{2}}{2}\right), \left(\frac{3\sqrt{2}}{2}, \frac{3\sqrt{2}}{2}\right),$$

$$\left(-\frac{\sqrt{2}}{2}, -\frac{\sqrt{2}}{2}\right), \left(-\frac{3\sqrt{2}}{2}, -\frac{3\sqrt{2}}{2}\right),$$

$$\left(\frac{\sqrt{2}}{2}, -\frac{\sqrt{2}}{2}\right), \left(\frac{3\sqrt{2}}{2}, -\frac{3\sqrt{2}}{2}\right),$$

$$\left(-\frac{\sqrt{2}}{2}, \frac{\sqrt{2}}{2}\right), \left(-\frac{3\sqrt{2}}{2}, \frac{3\sqrt{2}}{2}\right)$$

When it is necessary to perform power normalization on the second constellation model, the two-dimensional coordinates of the 8 constellation points corresponding to the second constellation model may be uniformly multiplied by a normalization factor (such as $1/sqrt(10)$).

Example VIII:

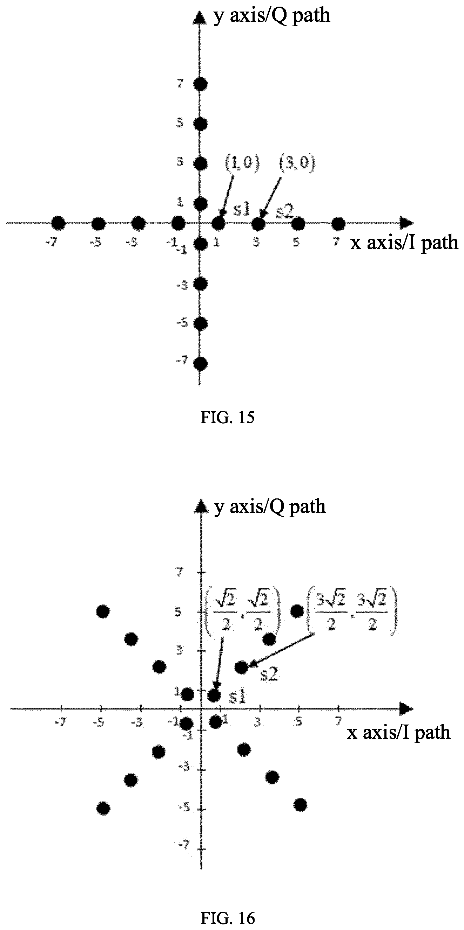

Referring to FIG. 15, when the second constellation model is a cross-shaped constellation diagram and the value of $M2$ is 2, 4 bits of information in the information packet can be modulated by means of the second constellation model, resulting in one modulation symbol. Based on $N2 = 2^{M2}$, $N2 = 4$ is derived. Therefore, the second constellation model is a cross-shaped constellation diagram including 16 constellation points. Here, the value of $d$ is 1, that is, the scaling component of the cross-shaped constellation diagram is 1; and the value of $\theta$ is 0, that is, the rotation component of the cross-shaped constellation diagram is 0, which means that the constellation points in the cross-shaped constellation diagram are distributed along the x axis and y axis (i.e., I path and Q path). Then, based on $a_n = (2n - 1 + \Delta)d$, $a_n = (2n - 1 + \Delta)d$ is derived. If $\Delta = 0$, then $a_n = 2n - 1$. Therefore, $a_1 = 1$, $a_2 = 3$. Based on $e^{j0} = \cos 0 + j\sin 0 = 1$, $e^{j(0+\pi/2)} = \cos(0 + \pi/2) + j\sin(0 + \pi/2) = j$, $e^{j(0+\pi)} = \cos(0 + \pi) + j\sin(0 + \pi) = -1$ and $e^{j(0+3\pi/2)} = \cos(0 + 3\pi/2) + j\sin(0 + 3\pi/2) = -j$, $a_1 e^{j0} = e^{j0} = 1$ and $a_2 e^{j0} = 3e^{j0} = 3$ are derived. Thus, the coordinates of the constellation point $s1$ corresponding to $a_1 e^{j0}$ are (1,0), and the coordinates of the constellation point $s2$ corresponding to $a_2 e^{j0}$ are (3,0). It is understood that the two-dimensional coordinates of other constellation points may be calculated using the complex forms corresponding to the constellation points in the second constellation model, which will not be elaborated further here.

Thus, the two-dimensional coordinates of the 16 constellation points may include:

$$(1,0), (3,0), (5,0), (7,0),$$

$$(-1,0), (-3,0), (-5,0), (-7,0),$$

$$(0,1), (0,3), (0,5), (0,7),$$

$$(0, -1), (0, -3), (0, -5), (0, -7)$$

When it is necessary to perform power normalization on the second constellation model, the two-dimensional coordinates of the 16 constellation points corresponding to the second constellation model may be uniformly multiplied by a normalization factor (such as $1/sqrt(84)$).

Example IX:

Referring to FIG. 16, when the second constellation model is a cross-shaped constellation diagram and the value of $M2$ is 2, 4 bits of information in the information packet can be modulated by means of the second constellation model, resulting in one modulation symbol. Based on $N2 = 2^{M2}$, $N2 = 4$ is derived. Therefore, the second constellation model is a cross-shaped constellation diagram including 16 constellation points. Here, the value of $d$ is 1, that is, the scaling component of the cross-shaped constellation diagram is 1; and the value of $\theta$ is $\pi/4$, that is, the rotation component of the cross-shaped constellation diagram is $\pi/4$, which means that half of the constellation points in the cross-shaped constellation diagram fall on a line passing through the zero point (i.e., the origin) and forming a 45° angle with the positive half of the $x$ axis, while the other half fall on a line passing through the zero point (i.e., the origin) and forming a 135° angle with the positive half of the x axis. Then, based on $a_n = (2n - 1 + \Delta)d$, $a_n = 2n - 1 + \Delta$ is derived. If $\Delta = 0$, $a_n = 2n - 1$.

Therefore, $a_1 = 1$, $a_2 = 3$. Further, $a_1 e^{j\pi/4} = e^{j\pi/4} = \frac{\sqrt{2}}{2} + \frac{\sqrt{2}}{2}j$ and $a_2 e^{j\pi/4} = 3e^{j\pi/4} = \frac{3\sqrt{2}}{2} + \frac{3\sqrt{2}}{2}j$ are derived.

Thus, the coordinates of the constellation point s1 corresponding to $a_1 e^{j\pi/4}$ are $\left(\frac{\sqrt{2}}{2}, \frac{\sqrt{2}}{2}\right)$, and the coordinates of the constellation point s2 corresponding to $a_2 e^{j\pi/4}$ are $\left(\frac{3\sqrt{2}}{2}, \frac{3\sqrt{2}}{2}\right)$. It is understood that the two-dimensional coordinates of other constellation points may be calculated using the complex forms corresponding to the constellation points in the second constellation model, which will not be elaborated further here.

Thus, the two-dimensional coordinates of the 16 constellation points may include:

$$\left(\frac{\sqrt{2}}{2}, \frac{\sqrt{2}}{2}\right), \left(\frac{3\sqrt{2}}{2}, \frac{3\sqrt{2}}{2}\right), \left(\frac{5\sqrt{2}}{2}, \frac{5\sqrt{2}}{2}\right), \left(\frac{7\sqrt{2}}{2}, \frac{7\sqrt{2}}{2}\right),$$

$$\left(-\frac{\sqrt{2}}{2}, -\frac{\sqrt{2}}{2}\right), \left(-\frac{3\sqrt{2}}{2}, -\frac{3\sqrt{2}}{2}\right), \left(-\frac{5\sqrt{2}}{2}, -\frac{5\sqrt{2}}{2}\right), \left(-\frac{7\sqrt{2}}{2}, -\frac{7\sqrt{2}}{2}\right),$$

$$\left(\frac{\sqrt{2}}{2}, -\frac{\sqrt{2}}{2}\right), \left(\frac{3\sqrt{2}}{2}, -\frac{3\sqrt{2}}{2}\right), \left(\frac{5\sqrt{2}}{2}, -\frac{5\sqrt{2}}{2}\right), \left(\frac{7\sqrt{2}}{2}, -\frac{7\sqrt{2}}{2}\right),$$

$$\left(-\frac{\sqrt{2}}{2}, \frac{\sqrt{2}}{2}\right), \left(-\frac{3\sqrt{2}}{2}, \frac{3\sqrt{2}}{2}\right), \left(-\frac{5\sqrt{2}}{2}, \frac{5\sqrt{2}}{2}\right), \left(-\frac{7\sqrt{2}}{2}, \frac{7\sqrt{2}}{2}\right)$$

When it is necessary to perform power normalization on the second constellation model, the two-dimensional coordinates of the 16 constellation points corresponding to the second constellation model may be uniformly multiplied by a normalization factor (such as $1/sqrt(84)$).

Example X:

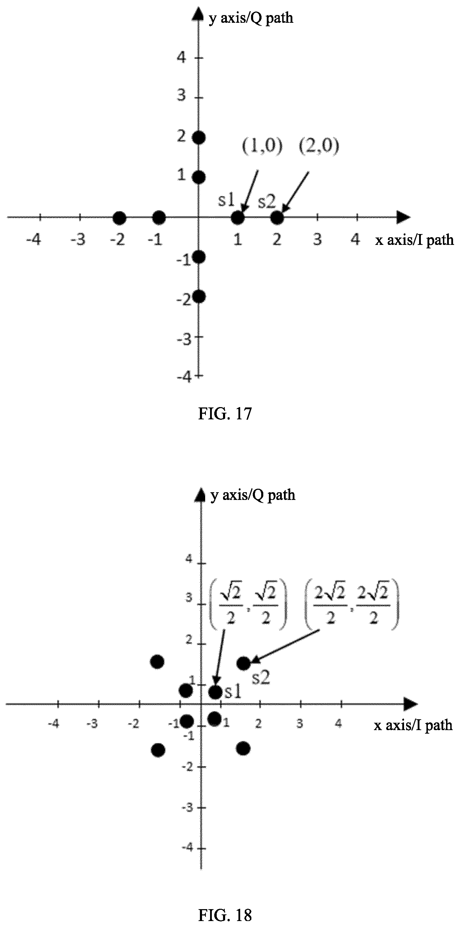

For example, the value of $\Delta$ meets the formula $\Delta = 0$. Referring to FIG. 17, when the second constellation model is a cross-shaped constellation diagram and the value of $M2$ is 1, three bits of information in the information packet can be modulated by means of the second constellation model, resulting in one modulation symbol. Based on $N2 = 2^{M2}$, $N2 = 2$ is derived. Therefore, the second constellation model is a cross-shaped constellation diagram including 8 constellation points. Here, the value of $d$ is 1, that is, the scaling component of the cross-shaped constellation diagram is 1; and the value of $\theta$ is 0, that is, the rotation component of the cross-shaped constellation diagram is 0, which means that the constellation points in the cross-shaped constellation diagram are distributed along the $x$ axis and $y$ axis (i.e., I path and Q path). Then, based on $a_n = 2n - 1$, $a_1 = 1$ and $a_2 = 2$ are derived. Because $e^{j0} = \cos 0 + j\sin 0 = 1$, $e^{j(0+\pi/2)} = \cos(0 + \pi/2) + j\sin(0 + \pi/2) = j$, $e^{j(0+\pi)} = \cos(0 + \pi) + j\sin(0 + \pi) = -1$ and $e^{j(0+3\pi/2)} = \cos(0 + 3\pi/2) + j\sin(0 + 3\pi/2) = -j$, $a_1 e^{j0} = 1$ and $a_2 e^{j0} = 2$ are derived. Thus, the coordinates of the constellation point s1 corresponding to $a_1 e^{j0}$ are (1,0), and the coordinates of the constellation point s2 corresponding to $a_2 e^{j0}$ are (2,0). It is understood that the two-dimensional coordinates of other constellation points may be calculated using the complex forms corresponding to the constellation points in the second constellation model, which will not be elaborated further here.

Thus, the two-dimensional coordinates of the 8 constellation points may include:

$$(1,0), (2,0),$$

$$(0,1), (0,2),$$

$$(-1,0), (-2,0),$$

$$(0,-1), (0,-2)$$

When it is necessary to perform power normalization on the second constellation model, the two-dimensional coordinates of the 8 constellation points corresponding to the second constellation model may be uniformly multiplied by a normalization factor (such as 1/$sqrt$(5)).

Example XI:

For example, the value of $\Delta$ meets the formula $\Delta = 0$. Referring to FIG. 18, when the second constellation model is a cross-shaped constellation diagram and the value of $M2$ is 1, three bits of information in the information packet can be modulated by means of the second constellation model, resulting in one modulation symbol. Based on $N2 = 2^{M2}$, $N2 = 2$ is derived. Therefore, the second constellation model is a cross-shaped constellation diagram including 8 constellation points. Here, the value of $d$ is 1, that is, the scaling component of the cross-shaped constellation diagram is 1; and the value of $\theta$ is $\pi/4$, that is, the rotation component of the cross-shaped constellation diagram is $\pi/4$, which means that half of the constellation points in the cross-shaped constellation diagram fall on a line passing through the zero point (i.e., the origin) and forming a 45° angle with the positive half of the $x$ axis, while the other half fall on a line passing through the zero point (i.e., the origin) and forming a 135° angle with the positive half of the $x$ axis. Then, based on $a_n = 2n - 1$, $a_1 = 1$ and $a_2 = 2$ are derived, so $a_1 e^{j\pi/4} = e^{j\pi/4} = \frac{\sqrt{2}}{2} + \frac{\sqrt{2}}{2}j$ and $a_2 e^{j\pi/4} = 2e^{j\pi/4} = \sqrt{2} + \sqrt{2}j$. Thus, the coordinates of the constellation point s1 corresponding to $a_1 e^{j\pi/4}$ are $\left(\frac{\sqrt{2}}{2}, \frac{\sqrt{2}}{2}\right)$, and the coordinates of the constellation point $s2$ corresponding to $a_2 e^{j\pi/4}$ are $\left(\frac{2\sqrt{2}}{2}, \frac{2\sqrt{2}}{2}\right)$. It is understood that the two-dimensional coordinates of other constellation points may be calculated using the complex forms corresponding to the constellation points in the second constellation model, which will not be elaborated further here.

Thus, complex representations corresponding to the 8 constellation points in the second constellation model are as follows:

$$a_1 e^{j\pi/4} = \frac{\sqrt{2}}{2} + \frac{\sqrt{2}}{2}j, a_2 e^{j\pi/4} = \frac{2\sqrt{2}}{2} + \frac{2\sqrt{2}}{2}j,$$

$$a_1 e^{j3\pi/4} = -\frac{\sqrt{2}}{2} + \frac{\sqrt{2}}{2}j, a_2 e^{\frac{j3\pi}{4}} = -\frac{2\sqrt{2}}{2} + \frac{2\sqrt{2}}{2}j,$$

$$a_1 e^{j5\pi/4} = -\frac{\sqrt{2}}{2} - \frac{\sqrt{2}}{2}j, a_2 e^{\frac{j5\pi}{4}} = -\frac{2\sqrt{2}}{2} - \frac{2\sqrt{2}}{2}j,$$

$$a_1 e^{j7\pi/4} = \frac{\sqrt{2}}{2} - \frac{\sqrt{2}}{2}j, a_2 e^{\frac{j7\pi}{4}} = \frac{2\sqrt{2}}{2} - \frac{2\sqrt{2}}{2}j$$

Therefore, the second constellation model may be a cross-shaped constellation diagram that includes 8 constellation points, as shown in FIG. 18. This means that the constellation diagram corresponding to $\theta=\pi/4$ may be obtained by rotating the constellation diagram corresponding to $\theta =0$ by 45°. Here, the two-dimensional coordinates of the 8 constellation points may include:

$$\left(\frac{\sqrt{2}}{2}, \frac{\sqrt{2}}{2}\right), \left(\frac{2\sqrt{2}}{2}, \frac{2\sqrt{2}}{2}\right),$$

$$\left(-\frac{\sqrt{2}}{2}, \frac{\sqrt{2}}{2}\right), \left(-\frac{2\sqrt{2}}{2}, \frac{2\sqrt{2}}{2}\right),$$

$$\left(-\frac{\sqrt{2}}{2}, -\frac{\sqrt{2}}{2}\right), \left(-\frac{2\sqrt{2}}{2}, -\frac{2\sqrt{2}}{2}\right),$$

$$\left(\frac{\sqrt{2}}{2}, -\frac{\sqrt{2}}{2}\right), \left(\frac{2\sqrt{2}}{2}, -\frac{2\sqrt{2}}{2}\right)$$

Example XII:

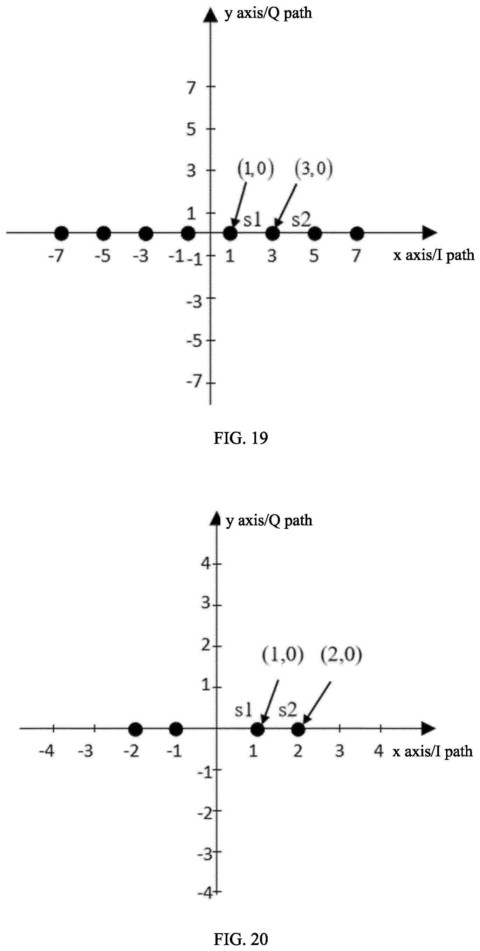

Referring to FIG. 19, when the first constellation model is a PAM constellation diagram and the value of $M1$ is 2, three bits of information in the information packet can be modulated by means of the first constellation model, resulting in one modulation symbol. Based on $N = 2^M$, $N1 = 4$ is derived. Therefore, the first constellation model is a PAM constellation diagram including 8 constellation points. Here, the value of $d$ is 1, that is, the scaling component of the PAM constellation diagram is 1; and the value of $\theta$ is 0, that is, the rotation component of the PAM constellation diagram is 0, which means that the constellation points in the PAM constellation diagram are distributed along the $x$ axis (i.e., I path). Then, based on $a_n = (2n-1+\varDelta)d$, $a_n = 2n-1+\Delta$ is derived. If $\Delta= 0$, then $a_n = 2n-1$. Therefore, $a_1 = 1$, $a_2 = 3$. Further, $a_1 e^{j0} = e^{j0} = 1$ and $a_2 e^{j0} = 3e^{j0} = 3$ are derived. Thus, the coordinates of the constellation point $s1$ corresponding to $a_1 e^{j0}$ are $(1,0)$, and the coordinates of the constellation point $s2$ corresponding to $a_2 e^{j0}$ are $(3,0)$. It is understood that the two-dimensional coordinates of other constellation points may be calculated using the complex forms corresponding to the constellation points in the first constellation model, which will not be elaborated further here.

Thus, the two-dimensional coordinates of the 8 constellation points may include:

$$(1,0), (3,0), (5,0), (7,0),$$

$$(-1,0), (-3,0), (-5,0), (-7,0)$$

When it is necessary to perform power normalization on the first constellation model, the two-dimensional coordinates of the 8 constellation points corresponding to the first constellation model may be uniformly multiplied by a normalization factor (such as 1/$sqrt$(84)).

Example XIII:

For example, the value of $\Delta$ meets the formula $\Delta= 0$. Referring to FIG. 20, when the first constellation model is a PAM constellation diagram and the value of $M1$ is 1, two bits of information in the information packet can be modulated by means of the first constellation model, resulting in one modulation symbol. Based on $N1 = 2^{M1}$, $N1 = 2$ is derived. Therefore, the first constellation model is a PAM constellation diagram including 4 constellation points. Here, the value of $d$ is 1, that is, the scaling component of the PAM constellation diagram is 1; and the value of $\theta$ is 0, that is, the rotation component of the PAM constellation diagram is 0, which means that the constellation points in the PAM constellation diagram are distributed along the $x$ axis (i.e., I path). Then, based on $a_n = 2n-1$, $a_1 = 1$ and $a_2 = 2$ are derived. Further, $a_1 e^{j0} = e^{j0} = 1$ and $a_2 e^{j0} = 2e^{j0}$

= 2 are derived. Thus, the coordinates of the constellation point $s1$ corresponding to $a_1 e^{j0}$ are (1,0), and the coordinates of the constellation point $s2$ corresponding to $a_2 e^{j0}$ are (2,0). It is understood that the two-dimensional coordinates of other constellation points may be calculated using the complex forms corresponding to the constellation points in the first constellation model, which will not be elaborated further here.

Thus, the two-dimensional coordinates of the 4 constellation points may include:

$$(1,0), (2,0),$$

$$(-1,0), (-2,0)$$

When it is necessary to perform power normalization on the first constellation model, the two-dimensional coordinates of the 4 constellation points corresponding to the first constellation model may be uniformly multiplied by a normalization factor (such as $1/sqrt(5)$).

It is understood that the coordinates corresponding to the constellation points in the second constellation model may include the following:

$$(a_1 \cos\theta, a_1 \sin\theta), (a_2 \cos\theta, a_2 \sin\theta), \cdots, (a_n \cos\theta, a_n \sin\theta),$$

$$(a_1 \cos(\theta + \pi/2), a_1 \sin(\theta + \pi/2)), (a_2 \cos(\theta + \pi/2), a_2 \sin(\theta + \pi/2)), \cdots, \left(a_n \cos\left(\theta + \frac{\pi}{2}\right), a_n \sin\left(\theta + \frac{\pi}{2}\right)\right),$$

$$(a_1 \cos(\theta + \pi), a_1 \sin(\theta + \pi)), (a_2 \cos(\theta + \pi), a_2 \sin(\theta + \pi)), \cdots, (a_n \cos(\theta + \pi), a_n \sin(\theta + \pi)),$$

$$(a_1 \cos(\theta + 3\pi/2), a_1 \sin(\theta + 3\pi/2)), (a_2 \cos(\theta + 3\pi/2), a_2 \sin(\theta + 3\pi/2)), \cdots, (a_n \cos(\theta + 3\pi/2), a_n \sin(\theta + 3\pi/2))$$

According to the trigonometric function formulas, the coordinates corresponding to the constellation points in the second constellation model may also be represented as follows:

$$(a_1 \cos\theta, a_1 \sin\theta), (a_2 \cos\theta, a_2 \sin\theta), \cdots, (a_n \cos\theta, a_n \sin\theta)$$

$$(-a_1 \sin\theta, a_1 \cos\theta), (-a_2 \sin\theta, a_2 \cos\theta), \cdots, (-a_n \sin\theta, a_n \cos\theta)$$

$$(-a_1 \cos\theta, -a_1 \sin\theta), (-a_2 \cos\theta, -a_2 \sin\theta), \cdots, (-a_n \cos\theta, -a_n \sin\theta)$$

$$(a_1 \sin\theta, -a_1 \cos\theta), (a_2 \sin\theta, -a_2 \cos\theta), \cdots, (a_n \sin\theta, -a_n \cos\theta)$$

Here, the trigonometric function formulas include the following:

$$\cos(\theta + \pi/2) = -\sin\theta$$

$$\sin(\theta + \pi/2) = \cos\theta$$

$$\cos(\theta + \pi) = -\cos\theta$$

$$\sin(\theta + \pi) = -\sin\theta$$

$$\cos(\theta + 3\pi/2) = \sin\theta$$

$$\sin(\theta + 3\pi/2) = -\cos\theta$$

It is worth noting that in the case where the value of $\theta$ is 0, that is, the rotation component of the cross-shaped constellation diagram is 0, the constellation points in the cross-shaped constellation diagram are distributed along the *x* axis and the *y* axis. Therefore, the coordinates corresponding to the constellation points in the second constellation model may include:

$$(a_1, 0), (a_2, 0), \cdots, (a_n, 0),$$

$$(0, a_1), (0, a_2), \cdots, (0, a_n),$$

$$(-a_1, 0), (-a_2, 0), \cdots, (-a_n, 0),$$

$$(0, -a_1), (0, -a_2), \cdots, (0, -a_n)$$

It is worth noting that in the case where the value of $\theta$ is $\pi/4$, that is, the rotation component of the cross-shaped constellation diagram is $\pi/4$, the constellation points in the cross-shaped constellation diagram are distributed along the lines at 45° and 135° directions passing through the origin. Therefore, the coordinates corresponding to the constellation points in the second constellation model may include:

$$\left(\frac{\sqrt{2}}{2}a_1, \frac{\sqrt{2}}{2}a_1\right), \left(\frac{\sqrt{2}}{2}a_2, \frac{\sqrt{2}}{2}a_2\right), \cdots, \left(\frac{\sqrt{2}}{2}a_n, \frac{\sqrt{2}}{2}a_n\right),$$

$$\left(-\frac{\sqrt{2}}{2}a_1, \frac{\sqrt{2}}{2}a_1\right), \left(-\frac{\sqrt{2}}{2}a_2, \frac{\sqrt{2}}{2}a_2\right), \cdots, \left(-\frac{\sqrt{2}}{2}a_n, \frac{\sqrt{2}}{2}a_n\right),$$

$$\left(-\frac{\sqrt{2}}{2}a_1, -\frac{\sqrt{2}}{2}a_1\right), \left(-\frac{\sqrt{2}}{2}a_2, -\frac{\sqrt{2}}{2}a_2\right), \cdots, \left(-\frac{\sqrt{2}}{2}a_n, -\frac{\sqrt{2}}{2}a_n\right),$$

$$\left(\frac{\sqrt{2}}{2}a_1, -\frac{\sqrt{2}}{2}a_1\right), \left(\frac{\sqrt{2}}{2}a_2, -\frac{\sqrt{2}}{2}a_2\right), \cdots, \left(\frac{\sqrt{2}}{2}a_n, -\frac{\sqrt{2}}{2}a_n\right)$$

Example XIV:

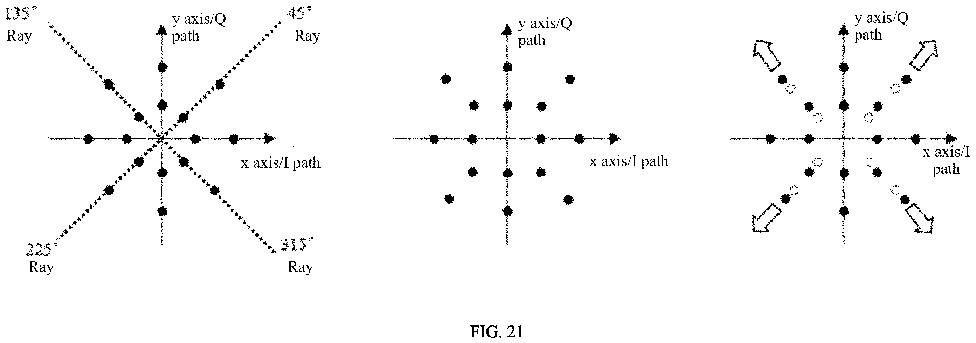

Referring to FIG. 21, which is a schematic view of a third constellation model provided by an embodiment of the present disclosure. Here, the third constellation model may be understood as an 8-arm constellation diagram. The constellation points in the 8-arm constellation diagram corresponding to the left coordinate system in FIG. 21 are distributed along the lines passing through the x axis (i.e., I path) including the positive and negative half-axis rays, lines passing through the y axis (i.e., Q path) including the positive and negative half-axis rays, and rays passing through the origin at 45°, 135°, 225°, and 315° directions. For the third constellation model, when $b_n = a_n$, the 8-arm constellation diagram corresponding to the middle coordinate system in FIG. 21 may be formed, and when $b_n = a_n + \beta$, the 8-arm constellation diagram corresponding to the right coordinate system in FIG. 21 may be formed. It is understood that the 8-arm constellation diagram corresponding to the right coordinate system in FIG. 21 may be formed by uniformly expanding the amplitudes of the constellation points on the four arms (the rays passing through the origin at 45°, 135°, 225°, and 315° directions) of the 8-arm constellation diagram corresponding to the middle coordinate system in FIG. 21, allowing for more even distribution of constellation points in the star-shaped constellation diagram, thereby improving demodulation performance.

Example XV:

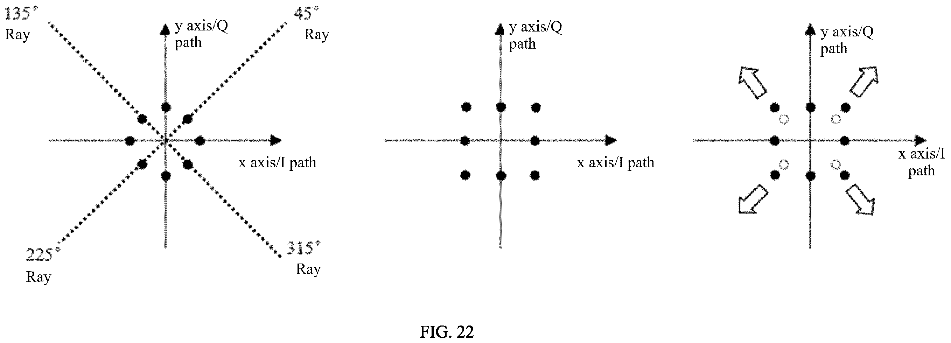

Referring to FIG. 22, which is a schematic view of a third constellation model provided by an embodiment of the present disclosure. Here, the third constellation model may be understood as an 8-arm constellation diagram. When *M*3 = 0, the modulation symbols are obtained by modulating 3 bits of information in the information packet according to the third constellation model. Based on $N3 = 2^{M3}$, $N3 = 1$ is derived. Therefore, the third constellation model is an 8-arm constellation diagram including 8 constellation points. Here, the constellation points in the 8-arm constellation diagram corresponding to the left coordinate system in FIG. 22 are distributed along the lines passing through the x axis (i.e., I path) including the positive and negative half-axis rays, lines passing through the y axis (i.e., Q path) including the positive and negative half-axis rays, and rays passing through the origin at 45°, 135°, 225°, and 315° directions. For the third constellation model, when $b_n = a_n$, the 8-arm constellation diagram corresponding to the left coordinate system in FIG. 22 may be formed, and when $b_n = a_n + \beta$, the 8-arm constellation diagram corresponding to the middle and right coordinate systems in FIG. 22 may be formed.

It is understood that the 8-arm constellation diagram corresponding to the middle and right coordinate systems in FIG. 22 may be formed by uniformly expanding the amplitudes of the constellation points on the four arms (the rays passing through the origin at 45°, 135°, 225°, and 315° directions) of the 8-arm constellation diagram corresponding to the left coordinate system in FIG. 22, allowing for more even distribution of constellation points in the star-shaped constellation diagram, thereby improving demodulation performance.

It is understood that in all the aforementioned embodiments, the information being transmitted should be interpreted in a broad sense, that is, it may be either service data or information used for system control, i.e., signaling. Alternatively, information may include bit data that needs to be transmitted, such as service bit data or signaling bit data. Here, different English expressions like "message," "information," and "payload" can all represent information.

It is understood that in all the aforementioned embodiments, the first communication node may be a terminal device, such as a mobile phone, smartphone, laptop, personal digital assistant (PDA), PAD (tablet computer), navigation device, and other mobile terminal devices, or an IoT device terminal, etc., with no specific restrictions here.

It is understood that in all the aforementioned embodiments, the second communication node may be a base station, a receiver, an access point, etc., with no specific restrictions here.

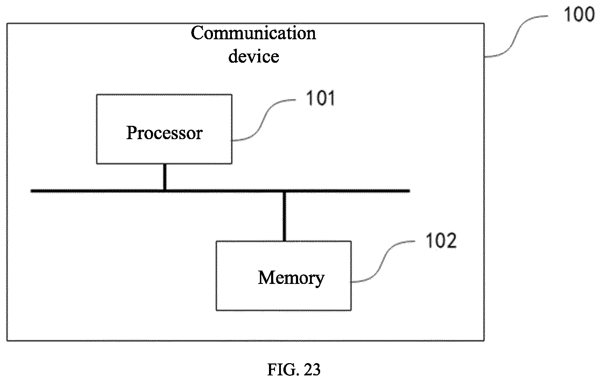

Further, referring to FIG. 23, an embodiment of the present disclosure also provides a communication device 100 which includes at least one processor 101 and at least one memory 102, where the at least one memory 102 is configured to store at least one program.

The processor 101 and the memory 102 may be connected by a bus or by other means.

As a non-transitory computer-readable storage medium, the memory 102 may be configured to store a non-transitory software program and a non-transitory computer-executable program. In addition, the memory 102 may include a high-speed random access memory and a non-transitory memory, for example, at least one magnetic disk storage device, a flash memory device, or another non-transitory solid-state storage device. In some implementations, the memory 102 may optionally include remote memories remotely located with respect to the processor 101, and these remote memories may be connected to the processor 101 via a network. Examples of the above-mentioned network include, but are not limited to, the Internet, an intranet, a local area network, a mobile communication network, and a combination thereof.

The memory 102 stores the non-transitory software program and instructions required for realizing the information transmission method in the above embodiments, which, when executed by the processor, cause the processor to perform the information transmission method as described in the previous embodiments, for example, to perform the above-described method step(s) S110 in FIG. 2, S210 to S220 in FIG. 3, or S310 in FIG. 4.

The device embodiments described above are only for illustration. The units described as separate components may or may not be physically separated, that is, they may be located at one place or distributed to multiple network units. Some or all of the modules can be selected according to actual needs to achieve the objective of the scheme of this embodiment.

Furthermore, an embodiment of the present disclosure also provides a computer-readable storage medium storing computer-executable instructions, which, when executed by a processor or a controller, for example, by the processor of the device in any of the above-described embodiments, cause the processor or controller to perform the information transmission method in any of the above-described embodiments, for example, to perform the above-described method step(s) S110 in FIG. 2, S210 to S220 in FIG. 3, or S310 in FIG. 4.

Furthermore, an embodiment of the present disclosure also provides a computer program product, including a computer program or computer instructions, where the computer program or the computer instructions are stored in a computer-readable storage medium, a processor of a computer device reads the computer program or the computer instructions from the computer-readable storage medium, and the computer program or the computer instructions, when executed by the processor, cause the computer device to perform the information transmission method as described in the previous embodiments, for example, to perform the above-described method step(s) S110 in FIG. 2, S210 to S220 in FIG. 3, or S310 in FIG. 4.

It can be understood by those of ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to a random access memory (RAM), a read-only memory (ROM), an electrically erasable programmable read-only memory (EEPROM), a flash memory or other memory techniques, a compact disc read-only memory (CD-ROM), a digital versatile disk (DVD) or other optical disk storage, a magnetic cassette, a magnetic tape, magnetic disk storage or other magnetic storage devices, or any other medium that can be used to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

**Claims**

1. An information transmission method, applied to a first communication node, comprising:
   transmitting modulation symbols to a second communication node in a non-connected state, wherein the modulation symbols are obtained by one of:

   modulating $M1 + 1$ bits of information in an information packet according to a first constellation model, wherein the first constellation model contains $2 * N1$ constellation points, $M1$ is an integer greater than or equal to 1, and $N1$ and $M1$ satisfy $N1 = 2^{M1}$; complex representations corresponding to the $2 * N1$ constellation points in the first constellation model are as follows:

   $$a_1 e^{j\theta}, a_2 e^{j\theta}, \cdots, a_{N1} e^{j\theta},$$

   $$a_1 e^{j(\theta+\pi)}, a_2 e^{j(\theta+\pi)}, \cdots, a_{N1} e^{j(\theta+\pi)};$$

   $\pi$ represents pi; $j$ represents an imaginary number; a value of $j$ is $\sqrt{-1}$; $e$ represents a natural logarithm; $\theta$ represents a real number; $a_1, a_2, \cdots, a_{N1}$ are all positive numbers and satisfy $0 < a_1 < a_2 < \cdots < a_{N1}$;
   modulating $M2 + 2$ bits of information in the information packet according to a second constellation model, wherein the second constellation model contains $4 * N2$ constellation points, $M2$ is an integer greater than or equal to 1, and $N2$ and $M2$ satisfy $N2 = 2^{M2}$; complex representations corresponding to the $4 * N2$ constellation points in the second constellation model are as follows:

   $$a_1 e^{j\theta}, a_2 e^{j\theta}, \cdots, a_{N2} e^{j\theta},$$

   $$b_1 e^{j(\theta+\pi/2)}, b_2 e^{j(\theta+\pi/2)}, \cdots, b_{N2} e^{j(\theta+\pi/2)},$$

   $$a_1 e^{j(\theta+\pi)}, a_2 e^{j(\theta+\pi)}, \cdots, a_{N2} e^{j(\theta+\pi)},$$

   $$b_1 e^{j(\theta+3\pi/2)}, b_2 e^{j(\theta+3\pi/2)}, \cdots, b_{N2} e^{j(\theta+3\pi/2)};$$

   $\pi$ represents pi; $j$ represents an imaginary number; a value of $j$ is $\sqrt{-1}$; $e$ represents a natural logarithm; $\theta$ represents a real number; $a_1, a_2, \cdots, a_{N2}$ and $b_1, b_2, \cdots, b_{N2}$ are all positive numbers and satisfy $0 < a_1 < a_2 < \cdots < a_{N2}$, $0 < b_1 < b_2 < \cdots < b_{N2}$; or
   modulating $M3 + 3$ bits of information in the information packet according to a third constellation model, wherein the third constellation model contains $8 * N3$ constellation points, $M3$ is an integer greater than or equal to 0, and $N3$ and $M3$ satisfy $N3 = 2^{M3}$; complex representations corresponding to the $8 * N3$ constellation points in the third constellation model are as follows:

$$a_1 e^{j\theta}, a_2 e^{j\theta}, \cdots, a_{N3} e^{j\theta},$$

$$b_1 e^{j\left(\theta+\frac{\pi}{4}\right)}, b_2 e^{j\left(\theta+\frac{\pi}{4}\right)}, \cdots, b_{N3} e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_{N3} e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_{N3} e^{j\left(\theta+\frac{3\pi}{4}\right)},$$

$$a_1 e^{j(\theta+\pi)}, a_2 e^{j(\theta+\pi)}, \cdots, a_{N3} e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_{N3} e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_{N3} e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_{N3} e^{j\left(\theta+\frac{7\pi}{4}\right)};$$

$\pi$ represents pi; $j$ represents an imaginary number; a value of $j$ is $\sqrt{-1}$; $e$ represents a natural logarithm; $\theta$ represents a real number; $a_1, a_2, \cdots, a_{N3}$ and $b_1, b_2, \cdots, b_{N3}$ are all positive numbers and satisfy $0 < a_1 < a_2 < \cdots < a_{N3}$, $0 < b_1 < b_2 < \cdots < b_{N3}$.

2. The method of claim 1, wherein

in response to the modulation symbols being obtained through modulation based on the first constellation model, $a_1, a_2, \cdots, a_{N1}$ are expressed using the following formula:

$$a_n = (2n - 1 + \Delta)d;$$

where values of $n$ comprise 1,2, ... , N1; $d$ represents a positive real number, and $\Delta$ represents a real number greater than or equal to 0; or
in response to the modulation symbols being obtained through modulation based on the second constellation model, $a_1, a_2, \cdots, a_{N2}$ are expressed using the following formula:

$$a_n = (2n - 1 + \Delta)d;$$

$b_1, b_2, \cdots, b_{N2}$ are expressed using the following formula:

$$b_n = a_n + \beta;$$

where values of $n$ comprise 1,2, ... , N2 ; $d$ represents a positive real number, and $\Delta$ and $\beta$ both represent real numbers greater than or equal to 0; or
in response to the modulation symbols being obtained through modulation based on the third constellation model, $a_1, a_2, \cdots, a_{N3}$ are expressed using the following formula:

$$a_n = (2n - 1 + \Delta)d;$$

$b_1, b_2, \cdots, b_{N3}$ are expressed using the following formula:

$$b_n = a_n + \beta;$$

where values of $n$ comprise $1,2, \ldots, N3$ ; $d$ represents a positive real number, and $\Delta$ and $\beta$ both represent real numbers greater than or equal to 0.

3.  The method of claim 2, wherein a value of $\Delta$ is 0, and a value of $d$ is 1, such that $a_n$ satisfy $a_n = 2n - 1$.

4.  The method of claim 2, wherein a value of $\Delta$ is 1, and a value of $d$ is 1/2, such that $a_n$ satisfy $a_n = n$.

5.  The method of claim 2, wherein a value of $\Delta$ is 3, and a value of $d$ is 1/2, such that $a_n$ satisfy $a_n = n + 1$.

6.  The method of claim 2, wherein a value of $\Delta$ is $\sqrt{2} - 1$.

7.  The method of claim 6, wherein

    a value of $d$ is 1, such that $a_n$ satisfy $a_n = 2n - 2 + \sqrt{2}$ ; or

    a value of $d$ is 1/2, such that $a_n$ satisfy $a_n = n - 1 + \sqrt{2}/2$.

8.  The method of claim 2, wherein in response to the modulation symbols being obtained through modulation based on the second constellation model or the third constellation model, $\beta$ equals 0.

9.  The method of claim 2, wherein in response to the modulation symbols being obtained through modulation based on the third constellation model, $\beta$ is greater than 0.

10. The method of claim 2, wherein

    in response to the modulation symbols being obtained through modulation based on the first constellation model, $d$ is configured with a value that makes an average power of the modulation symbols, obtained through modulation based on the first constellation model, equal to 1;
    in response to the modulation symbols being obtained through modulation based on the second constellation model, $d$ is configured with a value that makes an average power of the modulation symbols, obtained through modulation based on the second constellation model, equal to 1; or
    in response to the modulation symbols being obtained through modulation based on the third constellation model, $d$ is configured with a value that makes an average power of the modulation symbols, obtained through modulation based on the third constellation model, equal to 1.

11. The method of claim 1, wherein $\theta$ is equal to one of 0, $\pi/4$, or $\pi/8$.

12. The method of claim 1, wherein the transmitting modulation symbols to a second communication node comprises one of:

    transmitting the modulation symbols to the second communication node over a preset public channel; or
    transmitting the modulation symbols to the second communication node over a preset public channel using target transmission resources, the target transmission resources being determined by the first communication node.

13. The method of claim 1, wherein the transmitting modulation symbols to a second communication node comprises:

    determining a first number of pilots; and
    transmitting the modulation symbols along with the first number of pilots to the second communication node, the first number being greater than 1.

14. The method of claim 13, wherein in response to the first number being greater than or equal to 2:

    the first number of pilots are mutually independent; or
    the first number of pilots are determined based on information in the information packet; or
    the first number of pilots are determined based on one or more bits of information in the information packet; or
    each of the pilots is determined from a preset pilot set based on a second number of bits of information in the information packet, the preset pilot set comprising a third number of pilots, and the second number having a logarithmic function relationship with the third number, with a logarithm base of 2.

15. The method of claim 1, wherein during transmitting the modulation symbols to the second communication node in a non-connected state, no pilots are transmitted.

16. An information transmission method, applied to a second communication node, comprising:
receiving modulation symbols sent by a first communication node in a non-connected state, wherein the modulation symbols are obtained by one of:

modulating $M1 + 1$ bits of information in an information packet according to a first constellation model, wherein the first constellation model contains $2 * N1$ constellation points, $M1$ is an integer greater than or equal to 1, and $N1$ and $M1$ satisfy $N1 = 2^{M1}$; complex representations corresponding to the $2 * N1$ constellation points in the first constellation model are as follows:

$$a_1 e^{j\theta}, a_2 e^{j\theta}, \cdots, a_{N1} e^{j\theta},$$

$$a_1 e^{j(\theta+\pi)}, a_2 e^{j(\theta+\pi)}, \cdots, a_{N1} e^{j(\theta+\pi)};$$

$\pi$ represents pi; $j$ represents an imaginary number; a value of $j$ is $\sqrt{-1}$; $e$ represents a natural logarithm; $\theta$ represents a real number; $a_1$, $a_2$, $\cdots$, $a_{N1}$ are all positive numbers and satisfy $0 < a_1 < a_2 < \cdots < a_{N1}$;
modulating $M2 + 2$ bits of information in the packet according to a second constellation model, wherein the second constellation model contains $4 * N2$ constellation points, $M2$ is an integer greater than or equal to 1, and $N2$ and $M2$ satisfy $N2 = 2^{M2}$; complex representations corresponding to the $4 * N2$ constellation points in the second constellation model are as follows:

$$a_1 e^{j\theta}, a_2 e^{j\theta}, \cdots, a_{N2} e^{j\theta},$$

$$b_1 e^{j(\theta+\pi/2)}, b_2 e^{j(\theta+\pi/2)}, \cdots, b_{N2} e^{j(\theta+\pi/2)},$$

$$a_1 e^{j(\theta+\pi)}, a_2 e^{j(\theta+\pi)}, \cdots, a_{N2} e^{j(\theta+\pi)},$$

$$b_1 e^{j(\theta+3\pi/2)}, b_2 e^{j(\theta+3\pi/2)}, \cdots, b_{N2} e^{j(\theta+3\pi/2)};$$

$\pi$ represents pi; $j$ represents an imaginary number; a value of $j$ is $\sqrt{-1}$; $e$ represents a natural logarithm; $\theta$ represents a real number; $a_1$, $a_2$, $\cdots$, $a_{N2}$ and $b_1$, $b_2$, $\cdots$, $b_{N2}$ are all positive numbers and satisfy $0 < a_1 < a_2 < ... < a_{N2}$, $0 < b_1 < b_2 < \cdots < b_{N2}$; or
modulating $M3 + 3$ bits of information in the packet according to a third constellation model, wherein the third constellation model contains $8 * N3$ constellation points, $M3$ is an integer greater than or equal to 0, and $N3$ and $M3$ satisfy $N3 = 2^{M3}$; complex representations corresponding to the $8 * N3$ constellation points in the third constellation model are as follows:

$$a_1 e^{j\theta}, a_2 e^{j\theta}, \cdots, a_{N3} e^{j\theta},$$

$$b_1 e^{j\left(\theta+\frac{\pi}{4}\right)}, b_2 e^{j\left(\theta+\frac{\pi}{4}\right)}, \cdots, b_{N3} e^{j\left(\theta+\frac{\pi}{4}\right)},$$

$$a_1 e^{j\left(\theta+\frac{\pi}{2}\right)}, a_2 e^{j\left(\theta+\frac{\pi}{2}\right)}, \cdots, a_{N3} e^{j\left(\theta+\frac{\pi}{2}\right)},$$

$$b_1 e^{j\left(\theta+\frac{3\pi}{4}\right)}, b_2 e^{j\left(\theta+\frac{3\pi}{4}\right)}, \cdots, b_{N3} e^{j\left(\theta+\frac{3\pi}{4}\right)},$$

$$a_1 e^{j(\theta+\pi)}, a_2 e^{j(\theta+\pi)}, \cdots, a_{N3} e^{j(\theta+\pi)},$$

$$b_1 e^{j\left(\theta+\frac{5\pi}{4}\right)}, b_2 e^{j\left(\theta+\frac{5\pi}{4}\right)}, \cdots, b_{N3} e^{j\left(\theta+\frac{5\pi}{4}\right)},$$

$$a_1 e^{j\left(\theta+\frac{3\pi}{2}\right)}, a_2 e^{j\left(\theta+\frac{3\pi}{2}\right)}, \cdots, a_{N3} e^{j\left(\theta+\frac{3\pi}{2}\right)},$$

$$b_1 e^{j\left(\theta+\frac{7\pi}{4}\right)}, b_2 e^{j\left(\theta+\frac{7\pi}{4}\right)}, \cdots, b_{N3} e^{j\left(\theta+\frac{7\pi}{4}\right)};$$

$\pi$ represents pi; $j$ represents an imaginary number; a value of $j$ is $\sqrt{-1}$ ; $e$ represents a natural logarithm; $\theta$ represents a real number; $a_1, a_2, \cdots, a_{N3}$ and $b_1, b_2, \cdots, b_{N3}$ are all positive numbers and satisfy $0 < a_1 < a_2 < \cdots < a_{N3}$, $0 < b_1 < b_2 < \cdots < b_{N3}$.

17. The method of claim 16, wherein

in response to the modulation symbols being obtained through modulation based on the first constellation model, $a_1, a_2, \cdots, a_{N1}$ are expressed using the following formula:

$$a_n = (2n - 1 + \Delta)d;$$

where values of $n$ comprise 1,2,...,N1; $d$ represents a positive real number, and $\Delta$ represents a real number greater than or equal to 0; or
in response to the modulation symbols being obtained through modulation based on the second constellation model, $a_1, a_2, \cdots, a_{N2}$ are expressed using the following formula:

$$a_n = (2n - 1 + \Delta)d;$$

$b_1, b_2, \cdots, b_{N2}$ are expressed using the following formula:

$$b_n = a_n + \beta;$$

where values of $n$ comprise 1,2,...,N2; $d$ represents a positive real number, and $\Delta$ and $\beta$ both represent real numbers greater than or equal to 0; or
in response to the modulation symbols being obtained through modulation based on the third constellation model, $a_1, a_2, \cdots, a_{N3}$ are expressed using the following formula:

$$a_n = (2n - 1 + \Delta)d;$$

$b_1, b_2, \cdots, b_{N3}$ are expressed using the following formula:

$$b_n = a_n + \beta;$$

where values of $n$ comprise 1,2,...,N3 ; $d$ represents a positive real number, and $\Delta$ and $\beta$ both represent real numbers greater than or equal to 0.

18. The method of claim 17, wherein a value of $\Delta$ is 0, and a value of $d$ is 1, such that $a_n$ satisfy $a_n = 2n - 1$.

19. The method of claim 17, wherein a value of $\Delta$ is 1, and a value of $d$ is 1/2, such that $a_n$ satisfy $a_n = n$.

20. The method of claim 17, wherein a value of $\Delta$ is 3, and a value of $d$ is 1/2, such that $a_n$ satisfy $a_n = n + 1$.

**21.** The method of claim 17, wherein a value of $\Delta$ is $\sqrt{2}-1$.

**22.** The method of claim 21, wherein

a value of $d$ is 1, such that $a_n$ satisfy $a_n = 2n - 2 + \sqrt{2}$; or

a value of $d$ is 1/2, such that $a_n$ satisfy $a_n = n - 1 + \sqrt{2}/2$.

**23.** The method of claim 17, wherein in response to the modulation symbols being obtained through modulation based on the second constellation model or the third constellation model, $\beta$ equals 0.

**24.** The method of claim 17, wherein in response to the modulation symbols being obtained through modulation based on the third constellation model, $\beta$ is greater than 0.

**25.** The method of claim 17, wherein

in response to the modulation symbols being obtained through modulation based on the first constellation model, $d$ is configured with a value that makes an average power of the modulation symbols, obtained through modulation based on the first constellation model, equal to 1; or
in response to the modulation symbols being obtained through modulation based on the second constellation model, $d$ is configured with a value that makes an average power of the modulation symbols, obtained through modulation based on the second constellation model, equal to 1; or
in response to the modulation symbols being obtained through modulation based on the third constellation model, $d$ is configured with a value that makes an average power of the modulation symbols, obtained through modulation based on the third constellation model, equal to 1.

**26.** The method of claim 16, wherein $\theta$ is equal to one of 0, $\pi/4$, or $\pi/8$.

**27.** The method of claim 16, wherein the receiving modulation symbols sent by a first communication node in a non-connected state comprises one of:

receiving modulation symbols sent by a first communication node in a non-connected state over a preset public channel; or
receiving modulation symbols sent by a first communication node in a non-connected state over a preset public channel using target transmission resources, the target transmission resources being determined by the first communication node.

**28.** The method of claim 16, wherein the receiving modulation symbols sent by a first communication node in a non-connected state comprises:
receiving modulation symbols and a first number of pilots sent by a first communication node in a non-connected state, the first number being greater than 1.

**29.** The method of claim 28, wherein in response to a value of the first number being greater than or equal to 2:

the first number of pilots are mutually independent; or
the first number of pilots are determined based on information in the information packet; or
the first number of pilots are determined based on one or more bits of information in the information packet; or
each of the pilots is determined from a preset pilot set based on a second number of bits of information in the information packet, the preset pilot set comprising a third number of pilots, and the second number having a logarithmic function relationship with the third number, with a logarithm base of 2.

**30.** The method of claim 16, wherein
during receiving the modulation symbols sent by the first communication node in a non-connected state, no pilots are received.

**31.** A communication device, comprising:

at least one processor; and

at least one memory for storing at least one program, wherein

the at least one program, when executed by the at least one processor, causes the at least one processor to implement the information transmission method of any one of claims 1 to 30.

32. A computer-readable storage medium, storing computer-executable instructions configured to implement the information transmission method of any one of claims 1 to 30.

FIG. 1

| S110 |
| --- |
| Transmit modulation symbols to a second communication node in a non-connected state |

FIG. 2

| S210 |
| --- |
| Determine a first number of pilots |

| S220 |
| --- |
| Transmit the modulation symbols along with the first number of pilots to the second communication node |

FIG. 3

| S310 |
| --- |
| Receive modulation symbols sent by a first communication node in a non-connected state |

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

EP 4 589 904 A1

FIG. 23

## INTERNATIONAL SEARCH REPORT

| International application No. |
|---|
| **PCT/CN2023/134402** |

### A. CLASSIFICATION OF SUBJECT MATTER

H04L27/34(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT; WPABSC; ENTXTC; VEN; WPABS; ENTXT; CNKI: 无连接, 状态, 空闲, 非激活, 调制, 符号, 高阶, 星座, 模型, 复数, non-connected, connectionless, connection-free, disconnected, state, idle, inactive, modulation, symbol, higher order, constellation, model, complex

### C. DOCUMENTS CONSIDERED TO BE RELEVANT

| Category* | Citation of document, with indication, where appropriate, of the relevant passages | Relevant to claim No. |
|---|---|---|
| A | CN 115208735 A (ZTE CORP.) 18 October 2022 (2022-10-18)<br>entire document | 1-32 |
| A | CN 114765570 A (HUAWEI TECHNOLOGIES CO., LTD.) 19 July 2022 (2022-07-19)<br>entire document | 1-32 |
| A | CN 110289894 A (UNIVERSITY OF ELECTRONIC SCIENCE AND TECHNOLOGY OF CHINA) 27 September 2019 (2019-09-27)<br>entire document | 1-32 |
| A | US 6078626 A (ERICSSON INC.) 20 June 2000 (2000-06-20)<br>entire document | 1-32 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 January 2024** | **18 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/134402**

| Patent document cited in search report | | | Publication date (day/month/year) | Patent family member(s) | Publication date (day/month/year) |
|---|---|---|---|---|---|
| CN | 115208735 | A | 18 October 2022 | None | |
| CN | 114765570 | A | 19 July 2022 | None | |
| CN | 110289894 | A | 27 September 2019 | None | |
| US | 6078626 | A | 20 June 2000 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211520098